# EUROPEAN PATENT SPECIFICATION

(11) **EP 2 148 083 B1**
(45) Date of publication and mention of the grant of the patent: **04.09.2019**
(21) Application number: 09009560.5
(22) Date of filing: 23.07.2009
(51) Int. Cl.: F02B 61/02, F02D 9/02, F02M 23/12, F02M 35/10, F02M 35/16, F02M 69/04

(54) **Straddle-type vehicle**
Grätschsitzfahrzeug
Véhicule de type à enfourcher

(30) Priority: 24.07.2008 JP 2008190450; 25.02.2009 JP 2009042957; 08.05.2009 JP 2009114017
(43) Date of publication of application: 27.01.2010
(73) Proprietor: Yamaha Hatsudoki Kabushiki Kaisha, Iwata-shi, Shizuoka 438-8501 (JP)
(72) Inventor: Morita, Kyouji, Iwata-shi Shizuoka-ken 438-8501 (JP); Nagai, Yoshitaka, Iwata-shi Shizuoka-ken 438-8501 (JP); Ishii, Wataru, Iwata-shi Shizuoka-ken 438-8501 (JP); Tsuzuku, Hiroyuki, Iwata-shi Shizuoka-ken 438-8501 (JP); Matsubara, Toshio, Iwata-shi Shizuoka-ken 438-8501 (JP); Gouke, Takayuki, Iwata-shi Shizuoka-ken 438-8501 (JP)
(74) Representative: Zimmermann, Tankred Klaus

(56) References cited:
- EP-A1- 1 555 431
- EP-A1- 1 754 884
- JP-A- 5 010 224

## Description

### BACKGROUND OF THE INVENTION

### 1. Field of the Invention

The present invention relates to a vehicle engine unit and a straddle-type vehicle.

### 2. Description of the Related Art

As disclosed in patent document 1 (Japanese Unexamined Patent Publication No. 5-10224 (1993)), some engine units for vehicles and the like are configured to apply an air stream to a fuel injected from an injector to promote disintegration of the fuel.

An engine unit disclosed in the above patent document 1 includes a cylinder head, an air intake pipe connected to the cylinder head, a fuel injection valve body inserted in the air intake pipe via an adaptor, and an auxiliary passage which connects the upstream end of an air intake throttle valve to the fuel injection valve. With this arrangement, intake air flows into the auxiliary passage from a main passage when the vehicle is driven with a lower load. The intake air flowing through the auxiliary passage is applied over the fuel injected from the injector to promote the disintegration of the fuel. This improves the fuel combustion efficiency.

In this engine unit, a communication passage is provided for communication between a portion of the main passage adjacent to a combustion chamber and an intermediate portion of the auxiliary passage. The opening and closing of the communication passage is controlled by a control valve and a controller which controls the control valve. When the vehicle is driven with a higher load, the control valve is opened in response to a command of the controller, thereby permitting the communication between the portion of the main passage adjacent to the combustion chamber and the intermediate portion of the auxiliary passage. Thus, the internal pressure of the auxiliary passage becomes equal to the pressure of the main passage in the vicinity of the combustion chamber. As a result, no pressure difference occurs in the vicinity of the injector. This suppresses turbulent flow of the fuel toward the auxiliary passage.

EP 1 754 884 A1 describes an air-cooled engine disposed so that the center axis of a cylinder in its cylinder block extends approximately horizontally and so that its cylinder head is directed toward the front. A fuel injection device is located between an intake valve and an intake port in the cylinder head. An injection nozzle of the fuel injection device and an intake valve opening are placed at a short distance. While the vehicle is idling or running at low speed, the vicinity of the tip of an injector of the fuel injection device is cooled by assist air supplied from a throttle body through a secondary passage, and when the vehicle runs normally or at high speed, the fuel injection device is cooled by the wind that hits the cylinder head.

EP 1 555 431 A1 describes an engine disposed below a seat with a cylinder head arranged on a front side of the vehicle and a intake pipe extending from above the cylinder head to the rear of the vehicle is disposed above the engine. The cylinder head of the engine includes an injector mounting section in which an injector for ejecting a fuel is mounted and an injection nozzle is arranged in a position between an axis of an intake valve and a center axis of an intake port, close to an end of the intake port on the intake valve side. The injector and an intake pipe are arranged so as to be prevented from interfering with each other.

### SUMMARY OF THE INVENTION

It is therefore an object of the present invention to provide a straddle-type vehicle including a vehicle engine unit which is arranged to promote the disintegration of the fuel for higher fuel combustion efficiency, capable of suppressing the turbulent flow of the fuel toward the auxiliary passage with a simple and less expensive construction and highly responsive to a throttle operation.

This object is achieved by a straddle-type vehicle of claim 1.

According to the present invention, to achieve the aforementioned object, there is provided a vehicle engine unit, which includes: an engine body including a cylinder head that defines a part of a combustion chamber and a part of a main air intake passage connected to the combustion chamber; an air intake pipe connected to the cylinder head and cooperative with the cylinder head to define the main air intake passage; a throttle body including two throttle valves spaced from each other in an intake air flow direction in the air intake pipe, and a tubular member that defines a part of the air intake pipe and accommodates the two throttle valves; and a fuel injection device attached to the cylinder head and having an injection nozzle which injects a fuel into the part of the main air intake passage defined in the cylinder head. The vehicle engine unit further includes an auxiliary air intake passage defining member that defines an auxiliary air intake passage communicating with a portion of the main air intake passage between the two throttle valves to guide intake air into a space adjacent to the injection nozzle at least during idling. The auxiliary air intake passage has a center axis having opposite ends, and crosses a plane containing a straight line segment that extends between the opposite ends of the center axis of the auxiliary air intake passage. The line segment is a straight line that connects the opposite ends of the center axis so that the line segment has a minimal length.

The inventive vehicle engine unit is arranged to promote the disintegration of the fuel for higher fuel combustion efficiency, capable of suppressing the turbulent flow of the fuel toward the auxiliary passage with a simple and less expensive construction, and highly responsive to the throttle operation. Further, the inventive approach is advantageous as it avoids an engine unit (like the one disclosed in the above patent document 1) that requires a control valve and a controller for controlling the control valve which leads to a complicated construction and higher costs.

### BRIEF DESCRIPTION OF THE DRAWINGS

Fig. 1 is a left side view of a motorcycle according to a first embodiment of the present invention.
Fig. 2 is a sectional view illustrating an engine unit as seen from the right side of the engine unit.
Fig. 3 is a sectional view of a cylinder head and its peripheral portion shown in Fig. 2.
Fig. 4 is a sectional view taken along a line IV-IV in Fig. 3.
Fig. 5 is a plan view of the engine unit.
Fig. 6 is a left side view illustrating a throttle body and its peripheral portion in an enlarged scale.
Fig. 7 is a graph showing relationships between the degree (angle) of opening of a first throttle valve and the degree of opening of a second throttle valve.
Fig. 8 is a schematic left side view illustrating the throttle body with its first and second throttle valves being fully open.
Fig. 9 is a right side view of the engine unit.
Fig. 10 is a characteristic graph showing relationships between the length of an auxiliary air intake passage and the turbulent flow.
Fig. 11 is an enlarged right side view of an auxiliary air intake passage defining member and its peripheral portion.
Fig. 12 is an enlarged plan view of the auxiliary air intake passage defining member and its peripheral portion.
Fig. 13 is a rear view of the auxiliary air intake passage defining member and its peripheral portion.
Fig. 14 is a right side view of a motorcycle according to a second embodiment.
Fig. 15 is a right side view illustrating an engine unit partly in section.
Fig. 16 is a sectional view taken along a line XVI-XVI in Fig. 15.
Fig. 17 is a plan view of the engine unit.
Fig. 18 is a right side view illustrating major portions of the engine unit.
Fig. 19 is a plan view of the engine unit around an auxiliary air intake passage defining member.
Fig. 20 is a front view of the engine unit around the auxiliary air intake passage.
Fig. 21 is a front view illustrating major portions of the engine unit when the motorcycle is supported by a side stand.
Fig. 22 is a sectional view illustrating a component of an engine unit according to another embodiment of the present invention.
Fig. 23 is a left side view illustrating, partly in section, major portions of an engine unit according to still another embodiment of the present invention.
Fig. 24 is a right side view illustrating, partly in section, major portions of an engine unit according to another embodiment of the present invention.
Fig. 25 is a plan view illustrating, partly in section, major portions of an engine unit according to still another embodiment of the present invention.
Fig. 26 is a plan view illustrating, partly in section, major portions of an engine unit according to another embodiment of the present invention.

### DETAILED DESCRIPTION OF PREFERRED EMBODIMENTS

### Background and Major Features of the present invention

An attempt has been made to suppress the turbulent flow of a fuel toward an auxiliary air intake passage with a simplified construction.

An experiment was carried out for analysis of the cause of the turbulent flow before the present invention was accomplished. As a result of the experiment, it has been found that the turbulent flow of the fuel toward the auxiliary air intake passage occurs during a very short period in which the engine is shifted from an exhaust stroke to an air intake stroke. Such a phenomenon may occur in the following manner.

Before the embodiments of the present invention are described in detail, major features of the present invention will be described.

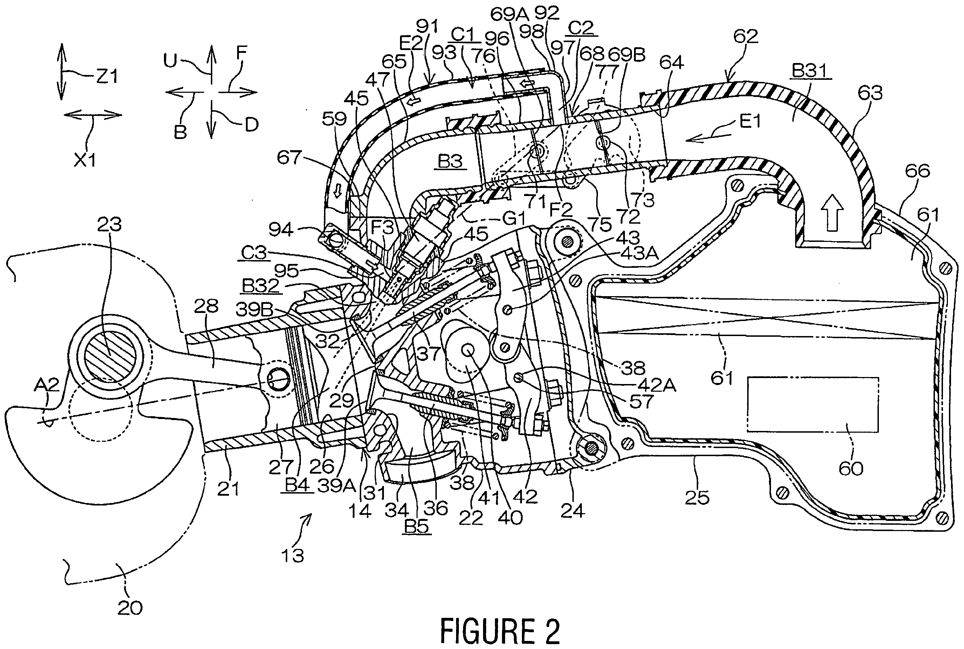

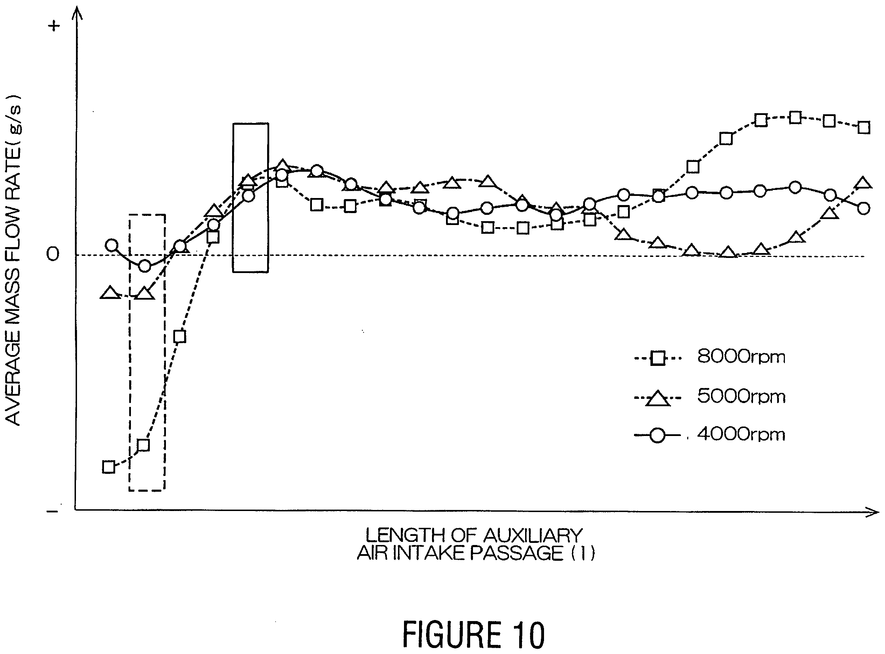

Referring to Fig. 2, it is well known that pressure fluctuations occurring due to repeated release of exhaust gas from an exhaust port 31 are transferred back and forth in the form of pressure waves in an exhaust pipe 34. On the other hand, the final stage of the exhaust stroke overlaps the initial stage of the air intake stroke for a very short period. Therefore, an exhaust valve 36 and an air intake valve 37 are simultaneously open during this overlap period. If a high pressure peak of the pressure waves is present in the exhaust port 31 when the exhaust valve 36 and the air intake valve 37 are both open, the high pressure peak prevents smooth release of exhaust gas, and affects an auxiliary air intake passage C1. That is, smooth introduction of a fuel-air mixture is prevented and, as a result, the fuel partly flows into the auxiliary air intake passage C1 due to the turbulent flow. As shown in Fig. 10, the turbulent flow toward the auxiliary air intake passage C1 is considerable when the engine body 14 is in a high-speed rotation state.

In Fig. 10, the average mass flow rate is an average mass (g/sec) of assist air flowing through a downstream end portion C3 of the auxiliary air intake passage C1 per unit of time. In Fig. 10, a plus (+) symbol indicates the positive flow of the assist air toward an injection nozzle 47b, while a minus (-) symbol indicates the reverse flow of the assist air or the turbulent flow of the fuel toward the auxiliary air intake passage C1. The length of the auxiliary air intake passage C1 is plotted as abscissa axis. The graph shown in Fig. 10 indicates that, if the length of the auxiliary air intake passage C1 is not less than a predetermined level, the turbulent flow of the fuel toward the auxiliary air intake passage C1 can be prevented irrespective of the rotation speed of the engine body 14. In practice, the optimum length of the auxiliary air intake passage C1 may be that indicated by plot points enclosed by a solid line frame in Fig. 10 in consideration of product variations. In the prior art, on the other hand, the auxiliary air intake passage ranging from an upstream end to a downstream end with respect to an intake air flow direction has the shortest possible length (though having a slight slack for a piping operation). As a result, the auxiliary air intake passage generally has a length indicated by plot points enclosed by a broken line frame in Fig. 10.

Referring to Fig. 2, a basic approach to the prevention of the turbulent flow of the fuel toward the auxiliary air intake passage C1 based on the above teachings is to increase the length of the auxiliary air intake passage C1 to not less than the predetermined level. For example, it is possible to locate a throttle body 68 apart from a cylinder head 22 to increase the length of the auxiliary air intake passage C1.

However, a distance between the throttle body 68 and an injector 47 influences a fuel combustion state. That is, if the distance between the throttle body 68 and the injector 47 is unconditionally changed, there is a possibility that the fuel combustion state will be deteriorated. If such an engine is mounted on the motorcycle, the size of the vehicle will be increased. Therefore, the aforementioned approach may be less feasible.

It is also possible to increase the length of the auxiliary air intake passage C1 with the opposite ends of the auxiliary air intake passage C1 being located at the same positions as in the prior art. However, if the auxiliary air intake passage C1 having an increased length is provided in an engine unit without consideration, a piping area is disadvantageously increased. This may result in interference between the auxiliary air intake passage C1 and its peripheral components.

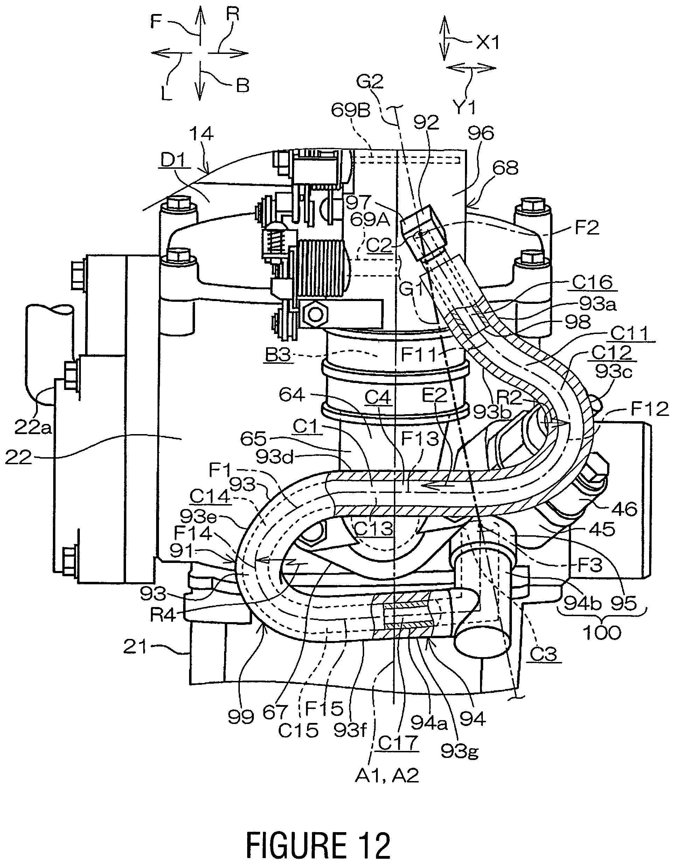

In accordance with the present invention the auxiliary air intake passage C1 is located so that, as shown in Fig. 12, a center axis F1 of the auxiliary air intake passage C1 crosses a plane G2 which contains a straight line segment G1, wherein the straight line segment extends between opposite ends F2 and F3 of the center axis F1. The line segment is a straight line that connects the opposite ends of the center axis so that the line segment has a minimal length With this arrangement, the auxiliary air intake passage C1 meanders so as to have a sufficiently great length. Thus, the resistance of fluid flow from a space adjacent to the injection nozzle 47b communicating with a downstream end portion C3 of the auxiliary air intake passage C1 to the auxiliary air intake passage C1 is sufficiently increased.

Even if the turbulent flow of the fuel occurs in the space adjacent to the injection nozzle 47b, the fuel is less liable to intrude into the auxiliary air intake passage C1. The auxiliary air intake passage C1 having an increased length can be compactly disposed in the vicinity of a main air intake passage B3, because the auxiliary air intake passage C1 meanders. The arrangement for preventing the turbulent flow of the fuel toward the auxiliary air intake passage C1 can be easily provided at lower costs simply by causing the auxiliary air intake passage C1 to meander. The length of the auxiliary air intake passage C1 is sufficiently increased by causing the auxiliary air intake passage C1 to meander, rather than by locating two throttle valves 69A, 69B apart from the cylinder head 22. This obviates the need for increasing distances between the two throttle valves 69A, 69B and a combustion chamber. Thus, it is possible to provide an engine that is highly responsive to a throttle operation.

### First Embodiment

With reference to the attached drawings, a first embodiment of the present invention will hereinafter be described. In the following description, directions between the front and the back, vertical directions and lateral (transverse) directions are defined on the basis of a reference position of a motorcycle 1 which travels straight ahead on a horizontal plane as seen from a viewpoint of a forward-facing rider of the motorcycle.

In the drawings, a forward direction of the motorcycle is indicated by an arrow F. Similarly, a rearward direction of the motorcycle is indicated by an arrow B. Further, an upward direction of the motorcycle is indicated by an arrow U, and a downward direction of the motorcycle is indicated by an arrow D. A leftward direction of the motorcycle is indicated by an arrow L, and a rightward direction of the motorcycle is indicated by an arrow R.

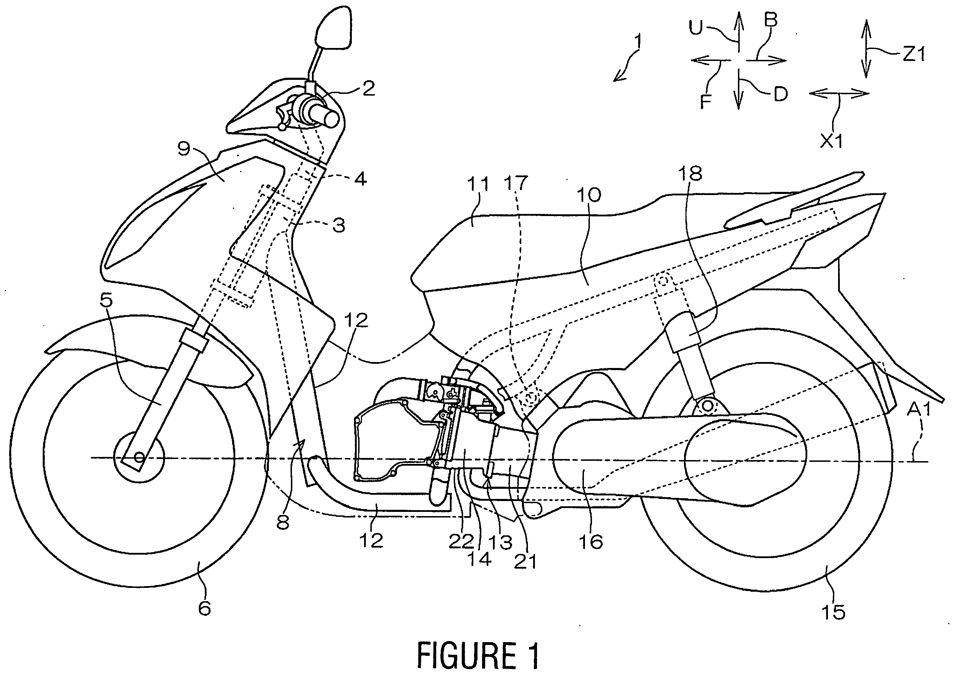

Fig. 1 is a left side view of the motorcycle 1 according to the first embodiment of the present invention. In Fig. 1, the motorcycle 1 is illustrated partly in a broken-away form. In the drawings, phantom lines are shown by two-dot-and-dash lines, and hidden outlines are shown by broken lines.

In this embodiment, the motorcycle 1 is a scooter. In this embodiment, the scooter will be described as an example of the inventive motorcycle, but not by way of limitation. The present invention is applicable to other straddle-type vehicles such as so-called motorcycles, mopeds, off-road vehicles, and ATVs (all terrain vehicles).

In Fig. 1, the entire motorcycle 1 according to this embodiment is shown. The motorcycle 1 includes a handlebar 2 provided in a front portion thereof. The handlebar 2 is operated to steer a front wheel 6 via a steering shaft 4 inserted in a head pipe 3 and a front fork 5. The head pipe 3 is combined with a vehicle body frame 8.

An upper portion of the head pipe 3 is covered with a cowling 9. The vehicle body frame 8 is entirely covered with a vehicle body cover 10. A seat 11 is disposed on top of the vehicle body cover 10.

The vehicle body frame 8 includes a main frame 12. An engine unit 13 is mounted on the main frame 12. The engine unit 13 includes an engine body 14, and a power transmission member 16 which transmits motive power from the engine body 14 to a rear wheel 15. The engine unit 13 is pivotable about a pivot shaft 17 with respect to the vehicle body frame 8.

The rear wheel 15 is connected to a rear portion of the engine unit 13. A lower end of a rear shock absorber 18 is connected to an upper portion of the power transmission member 16. An upper end of the rear shock absorber 18 is connected to the vehicle body frame 8. Thus, the engine unit 13 is swingable together with the rear wheel 15 about the pivot shaft 17.

The engine unit 13 having the aforementioned construction is a unit-swing engine (or a swing type engine). A vehicle center axis A1 is defined as extending through a center axis of the front wheel 6 and a center axis of the rear wheel 15. The vehicle center axis A1 extends along a center line of the motorcycle 1 which is defined with respect to a vehicle transverse direction Y1 (perpendicular to a paper face of Fig. 1).

Fig. 2 is a sectional view illustrating the engine unit 13 as seen from the right side of the engine unit 13. The engine body 14 includes an injector 47 (fuel injection device) . The engine body 14 is a single-cylinder four-stroke engine.

The engine body 14 is disposed with its cylinder axis A2 generally horizontally extending forward.

The engine body 14 includes a crank case 20, a cylinder block 21, and a cylinder head 22. A crank shaft 23 is accommodated in the crank case 20. The cylinder block 21 and the cylinder head 22 are disposed in this order in front of a front wall of the crank case 20. The crank case 20, the cylinder block 21 and the cylinder head 22 are connected to one another by means of bolts or the like. A head cover 24 is attached to a front end portion of the cylinder head 22. An air cleaner 25 for cleaning intake air is provided in front of the head cover 24. The air cleaner 25 is a part of the engine unit 13.

A piston 27 is accommodated in a slidable manner in a cylinder bore 26 of the cylinder block 21. The piston 27 is connected to the crank shaft 23 via a connecting rod 28. The cylinder head 22 has a combustion recess 29. The combustion recess 29 joins with the cylinder bore 26 in the cylinder head 22. A combustion chamber B4 is defined between the combustion recess 29 of the cylinder head 22, the cylinder bore 26 and the piston 27.

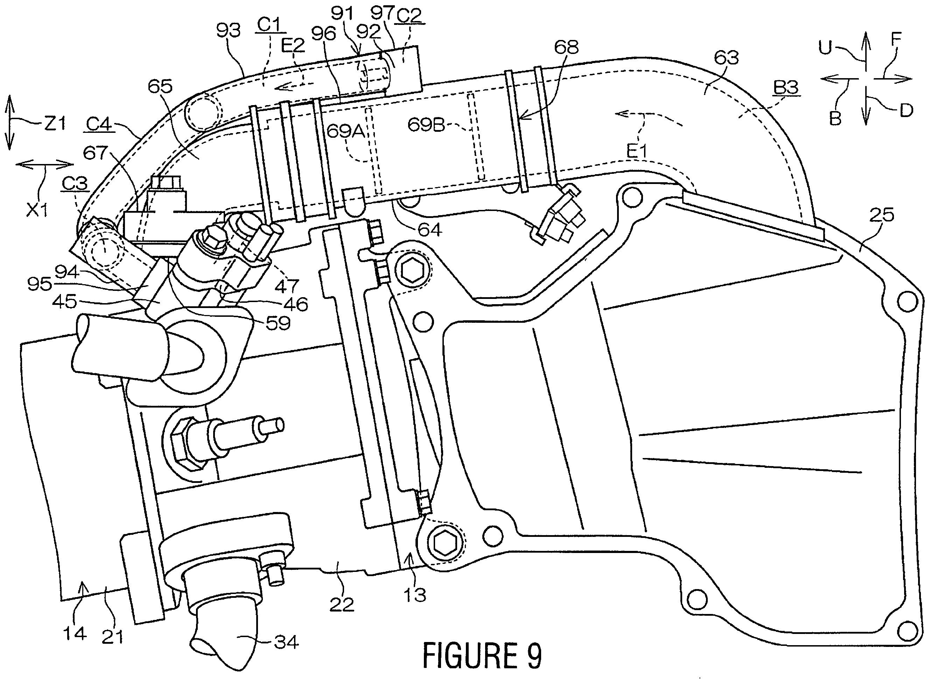

The cylinder head 22 has an exhaust port 31 and an air intake port 32. One of opposite ends of the exhaust port 31 opens in the combustion recess 29, thereby communicating with the combustion chamber B4. One of opposite ends of the air intake port 32 also opens in the combustion recess 29, thereby communicating with the combustion chamber B4. The exhaust port 31 defines a part of an exhaust passage B5 present in the cylinder head 22. The exhaust passage B5 extends downward in the cylinder head 22. The exhaust passage B5 communicates with an inside space of an exhaust pipe 34 (see Fig. 9). On the other hand, the air intake port 32 defines a portion B32 of a main air intake passage B3 present in the cylinder head 22.

The one end of the exhaust port 31 is opened and closed by a valve head 39A of an exhaust valve 36 provided in the cylinder head 22. Similarly, the one end of the air intake port 32 is opened and closed by a valve head 39B of an air intake valve 37 provided in the cylinder head 22.

The exhaust valve 36 has a valve spring 38. The valve spring 38 applies a spring force to the valve head 39A of the exhaust valve 36 in an exhaust port closing direction in which the one end of the exhaust port 31 is closed. The air intake valve 37 has a valve spring 38. The valve spring 38 applies a spring force to the valve head 39B of the air intake valve 37 in an air intake port closing direction in which the one end of the air intake port 32 is closed. A cam shaft 40 is provided between the valve springs 38. The cam shaft 40 includes an air intake/exhaust cam 41, and is rotatably supported by the cylinder head 22.

An exhaust locker arm 42 is disposed vertically between the cam shaft 40 and an axial end portion of the exhaust valve 36. The exhaust locker arm 42 is supported in a swingable manner by an exhaust locker arm shaft 42A.

On the other hand, an air intake locker arm 43 is disposed vertically between the cam shaft 40 and an axial end portion of the air intake valve 37. The air intake locker arm 43 is supported in a swingable manner by an air intake locker arm shaft 43A. One of opposite ends of the exhaust locker arm 42 and one of opposite ends of the air intake locker arm 43 are brought into contact with the cam 41 in accordance with a predetermined timing. Thus, front ends of valve shafts of the exhaust valve 36 and the air intake valve 37 are respectively pressed by the other ends of the locker arms 42 and 43. The exhaust valve 36 and the air intake valve 37 perform a port opening operation in accordance with a predetermined timing for opening the ports 31, 32 against the valve springs 38, 38.

The injector 47 is disposed in the vicinity of the air intake port 32 in a right upper portion of the cylinder head 22.

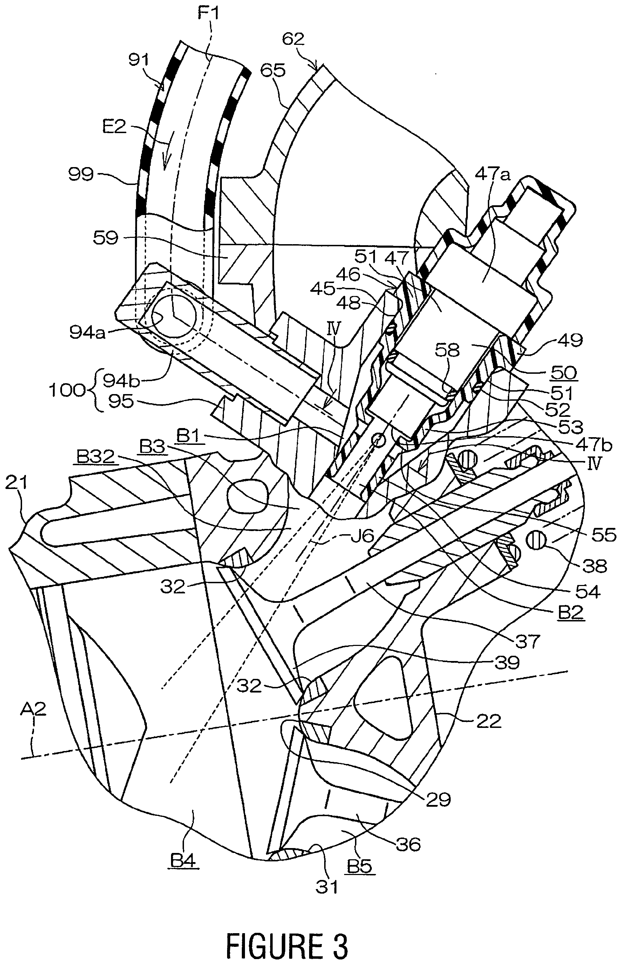

Fig. 3 is a sectional view of the cylinder head 22 and its peripheral portion shown in Fig. 2. As shown in Fig. 3, a part of the injector 47 is accommodated in a first boss 45 of the cylinder head 22, and fixed to the cylinder head 22.

The first boss 45 is an integral part of the cylinder head 22. An inside space of the first boss 45 communicates with the main air intake passage portion B32 in the air intake port 32.

The injector 47 (fuel injection device) is attached to the first boss 45 via a synthetic resin holder 46. Thus, the injector 47 is fixed to the cylinder head 22.

The holder 46 includes a cylindrical portion 48 and a flange 49 provided at a proximal end of the cylindrical portion 48. The flange 49 abuts against a distal end of the first boss 45. Thus, the holder 46 is positioned with respect to the first boss 45. The cylindrical portion 48 is accommodated in the first boss 45. A gap between an outer peripheral surface of a proximal end portion 51 of the cylindrical portion 48 and an inner peripheral surface of the first boss 45 is liquid-tightly sealed by a first seal member 52 such as an O-ring. An annular space is defined as a chamber B1 between an outer peripheral surface of an intermediate portion 53 of the cylindrical portion 48 and the inner peripheral surface of the first boss 45. A distal edge of a distal end portion 54 of the cylindrical portion 48 is engaged with the inner peripheral surface of the first boss 45 with virtually no gap.

An inside space of the distal end portion 54 of the cylindrical portion 48 is defined as an injection space B2 adjacent to the injector 47. The injection space B2 is thus provided in the cylinder head 22, and communicates with the combustion chamber B4 via the air intake valve 37. The distal end portion 54 of the cylindrical portion 48 is formed with a plurality of through-holes 55.

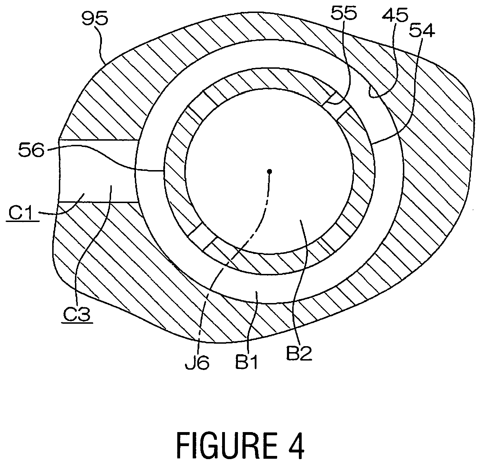

Referring to Fig. 3 and Fig. 4, which is a sectional view taken along a line IV-IV in Fig. 3, the through-holes 55 (e.g., four through-holes) are located equidistantly on the circumference of the distal end portion 54 of the cylindrical portion 48. The chamber B1 communicates with the injection space B2 via the through-holes 55.

The chamber B1 communicates with a downstream end portion C3 of an auxiliary air intake passage C1 to be described later. The distal end portion 54 of the cylindrical portion 48 has a portion 56 opposed to the downstream end portion C3. The opposed portion 56 is not formed with any of the through-holes 55. Thus, assist air (to be described later) flowing through the auxiliary air intake passage C1 is evenly distributed circumferentially of the chamber B1.

Referring to Fig. 3, the injector 47 serves to inject fuel supplied from a fuel tank (not shown) in the air intake passage. The injector 47 includes an injector body 47a having an elongated shape, and an injection nozzle 47b disposed at a distal end of the injector body 47a.

The injector body 47a is inserted in the cylindrical portion 48 of the holder 46 to be retained by the holder 46. In a longitudinal direction, generally half of the injector body 47a is accommodated in the first boss 45. A gap between an outer peripheral surface of the injector body 47a and an inner peripheral surface of the holder 46 is liquid-tightly sealed by a second seal member 58 such as an O-ring. The injection nozzle 47b faces the injection space B2, and is oriented so as to inject the fuel toward the air intake valve 37 via the main air intake passage portion B32 present in the cylinder head 22.

The injector 47 is inclined in the downward and rearward directions as a whole. Therefore, the injected fuel flows into the combustion recess 29 through the air intake port 32. Thus, a spiral flow occurs in the combustion recess 29.

Fuel injection timing at which the injector 47 injects the fuel toward the air intake valve 32 is controlled by a controller such as an ECU (an engine control unit or an electronic control unit) not shown.

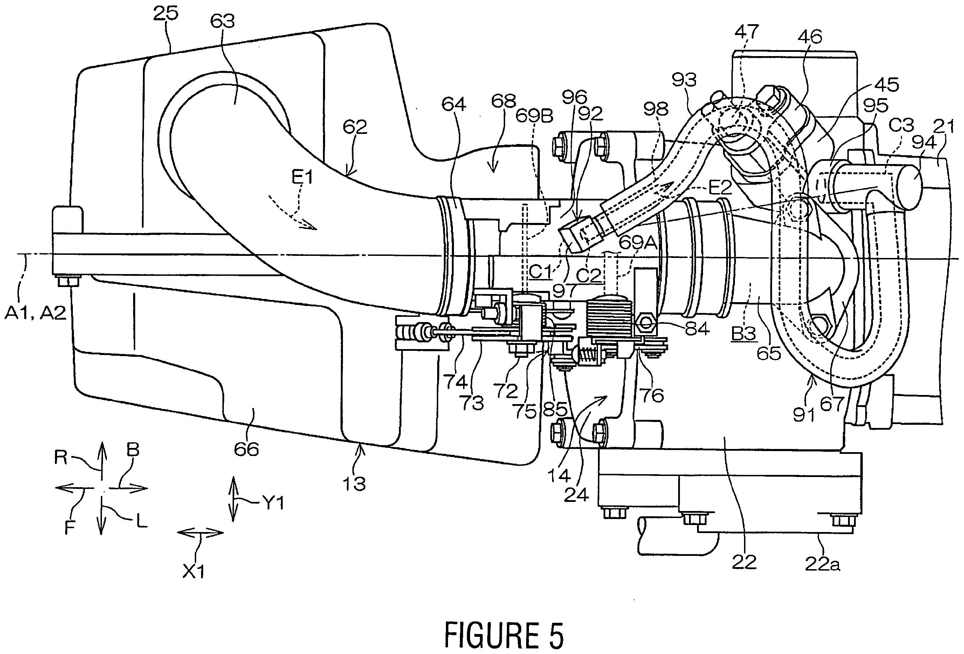

Fig. 5 is a plan view of the engine unit 13. Referring to Figs. 3 and 5, an engine side flange 59 is provided on an upper surface of the cylinder head 22. The engine side flange 59 has a center axis located in a lateral direction (Y1) close to the cylinder axis A2 of the engine body 14. The main air intake passage portion B32 present in the cylinder head 22 extends upward in the cylinder head 22. One of opposite ends of the main air intake passage portion B32 is defined by the engine side flange 59.

As seen in plan, the vehicle center axis A1 overlaps the cylinder axis A2.

Referring to Fig. 2, the air cleaner 25 has a box shape as a whole, and is disposed in front of the engine body 14. Outside air is taken into the air cleaner 25 through an air suction port 60.

In this embodiment, the inside of the air cleaner 25 is vertically divided by way of example but not by way of limitation. The inside of the air cleaner 25 may be divided in the direction between the front and the back (X1) of the vehicle or in the lateral direction (Y1) of the vehicle. The outside air taken into the air cleaner 25 through the air suction port 60 is filtered with a filter 61, and sucked out through an air intake hose 63.

The engine side flange 59 and the air cleaner 25 are connected to each other via an air intake pipe 62. The air intake pipe 62 defines a portion B31 of the main air intake passage B3, and is disposed above the engine body 14. The air intake pipe 62 extends rearward from a front portion of the air cleaner 25. The air intake pipe 62 includes an air intake hose 63 connected to the air cleaner 25 and extending rearward from the air cleaner 25, a cylindrical tubular member 64 connected to a rear end portion of the air intake hose 63, and a connection pipe 65 connected to a rear end of the tubular member 64 and having a rear end portion curved downward.

Referring to Fig. 5, the air intake hose 63 has a front end connected to a front right portion of an upper surface of a casing 66 of the air cleaner 25. The air intake hose 63 extends from the upper surface of the casing 66 to be curved upward toward a laterally intermediate portion of the engine unit 13. The air intake hose 63 extends rearward along the vehicle center axis A1 from an overlap point between a center axis of the air intake hose 63 and the vehicle center axis A1. The rear end portion of the air intake hose 63 is connected to a front end portion of the tubular member 64. The tubular member 64 is disposed between the air intake hose 63 and the connection pipe 65.

The tubular member 64 and the connection pipe 65 extend substantially along the vehicle center axis A1 as seen in plan of the vehicle.

As shown in Fig. 2, the tubular member 64 and the connection pipe 65 are inclined in the downward and rearward directions as seen from the right side of the motorcycle 1.

The connection pipe 65 has an intermediate portion in the direction between the front and the back that is curved in the downward and rearward directions from a front end portion thereof connected to the rear end of the tubular member 64. An air intake pipe side flange 67 is provided around the rear end portion of the connection pipe 65. The air intake pipe side flange 67 abuts against the engine side flange 59, and is fixed to the engine side flange 59 by fixture screws not shown. Thus, the main air intake passage portion B32 in the air intake port 32 and the main air intake passage portion B31 in the air intake pipe 62 communicate with each other to provide the main air intake passage B3 as a whole.

The engine unit 13 further includes a throttle body 68. The throttle body 68 includes the tubular member 64, and two throttle valves, i.e., first and second throttle valves 69A, 69B.

The tubular member 64 is disposed above the head cover 24 of the engine body 14.

The first and second throttle valves 69A, 69B each serve to open and close the main air intake passage portion B31 in the air intake pipe 62. The first throttle valve 69A and the second throttle valve 69B are spaced from each other in an intake air flow direction E1 in the main air intake passage B3. The first throttle valve 69A and the second throttle valve 69B are accommodated in the tubular member 64. The first throttle valve 69A is located downstream of the second throttle valve 69B with respect to the intake air flow direction E1. That is, the first throttle valve 69A is located between the second throttle valve 69B and the cylinder head 22 in the main air intake passage B3. The first throttle valve 69A and the second throttle valve 69B each have a disk shape.

The first throttle valve 69A is supported by a first rotation shaft 71 extending perpendicularly to a center axis of the tubular member 64. The second throttle valve 69B is supported by a second rotation shaft 72 extending perpendicularly to the center axis of the tubular member 64. The first rotation shaft 71 and the second rotation shaft 72 extend in a lateral direction (Y1) of the vehicle.

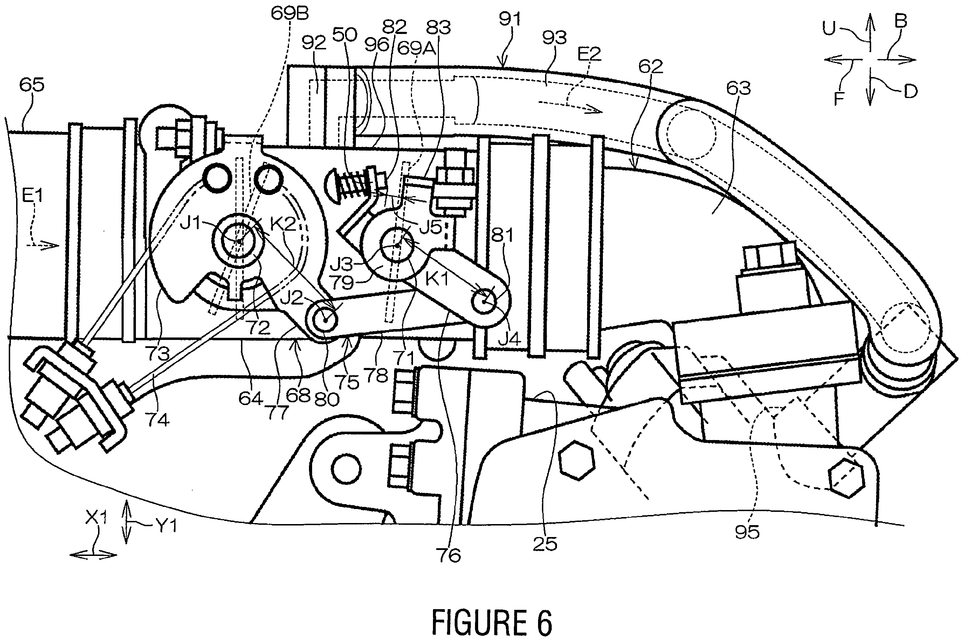

Fig. 6 is a left side view illustrating the throttle body 68 of the engine unit 13 and its peripheral portion in an enlarged scale. Referring to Fig. 6, the first rotation shaft 71 and the second rotation shaft 72 project to the left from a left side surface of the tubular member 64.

In this embodiment, the throttle body 68 will be described based on a state in which the first throttle valve 69A and the second throttle valve 69B are fully closed. The state in which the first throttle valve 69A and the second throttle valve 69B are fully closed herein means a state of the first throttle valve 69A and the second throttle valve 69B observed when a throttle grip of the handlebar 2 is not operated during idling.

The first rotation shaft 71 and the second rotation shaft 72 are each rotatably supported by the tubular member 64. The first throttle valve 69A is rotated together with the first rotation shaft 71 about the first rotation shaft 71 by the rotation of the first rotation shaft 71. Similarly, the second throttle valve 69B is rotated together with the second rotation shaft 72 about the second rotation shaft 72 by the rotation of the second rotation shaft 72.

A driving pulley 73 is coupled to a left end of the second rotation shaft 72 for unitary rotation. A throttle cable 74 is attached to the driving pulley 73. The throttle cable 74 has opposite ends, one of which is connected to the throttle grip of the handlebar 2 and the other of which is connected to the driving pulley 73. With this arrangement, the driving pulley 73 is rotated by a throttle operation performed by the rider. The rotation of the driving pulley 73 rotates the second rotation shaft 72, thereby opening and closing the second throttle valve 69B.

The opening/closing operation of the second throttle valve 69B is linked with the opening/closing operation of the first throttle valve 69A by a link mechanism 75. That is, the first and second throttle valves 69A, 69B are coupled to each other.

The link mechanism 75 has a so-called lost motion structure such that the first throttle valve 69A starts the opening operation with a time delay after the start of the opening operation of the second throttle valve 69B. The link mechanism 75 is located to the left of the tubular member 64 of the throttle body 68, and includes a first main link member 76, a second main link member 77 disposed in front of the first main link member 76, a sub-link member 78, and a rotation transmission member 79.

The second main link member 77 is a small piece provided integrally with the driving pulley 73, and is rotatable together with the second rotation shaft 72. The second main link member 77 is connected to a front end portion of the sub-link member 78 via a second connection shaft 80 for relative rotation.

The sub-link member 78 is a metal plate member elongated in the direction between the front and the back (X1) of the vehicle, and links the second main link member 77 to the first main link member 76.

The sub-link member 78 is disposed below the first rotation shaft 71 and the second rotation shaft 72.

The first main link member 76 is an elongated metal plate member. The first main link member 76 is inclined in the downward and rearward directions. A lower end portion of the first main link member 76 is connected to a rear end portion of the sub-link member 78 via a first connection shaft 81 for relative rotation. The first connection shaft 81 is parallel to the first rotation shaft 71.

An upper end portion of the first main link member 76 includes an extension member 50 extending away from a center axis J3 of the first rotation shaft 71. A press member 82 is provided on the extension member 50. The press member 82 projects from the extension member 50 in one of opposite circumferential directions of the first rotation shaft 71 (in a rightward direction in Fig. 6). Thus, the press member 82 is opposed to a to-be-pressed member 83 (to be described later) of the rotation transmission member 79 circumferentially of the first rotation shaft 71.

An intermediate portion of the first main link member 76 is connected to the first rotation shaft 71 for relative rotation. Thus, the first main link member 76 is rotatable independently of the first rotation shaft 71.

A center axis J1 of the second rotation shaft 72 serving as a pivot center of the second main link member 77 is spaced a distance K2 from a center axis J2 of the second connection shaft 80. Further, the center axis J3 of the first rotation shaft 71 serving as a pivot center of the first main link member 76 is spaced a distance K1 from a center axis J4 of the first connection shaft 81. A relationship between the distances K1 and K2 is K2 > K1.

The rotation transmission member 79 is a metal plate member. The rotation transmission member 79 is connected to the first rotation shaft 71 for unitary rotation. The rotation transmission member 79 includes the to-be-pressed member 83 to be brought into abutment against the press member 82. The to-be-pressed member 83 extends away from the center axis J3 of the first rotation shaft 71. With the second throttle valve 69B being fully closed, the press member 82 and the to-be-pressed member 83 are opposed to and spaced a predetermined distance J5 from each other circumferentially of the first rotation shaft 71.

Referring to Fig. 5, a first torsion coil spring 84 is disposed between the tubular member 64 of the throttle body 68 and the first main link member 76. The first torsion coil spring 84 serves to apply a force to the first throttle valve 69A in a valve closing direction.

A second torsion coil spring 85 is disposed between the tubular member 64 of the throttle body 68 and the driving pulley 73. A force of the second torsion coil spring 85 is transmitted to the second rotation shaft 72 via the driving pulley 73. Thus, the force is applied to the second throttle valve 69B in a valve closing direction.

The engine unit 13 further includes an auxiliary air intake passage defining member 91. The auxiliary air intake passage defining member 91 defines the auxiliary air intake passage C1. The auxiliary air intake passage C1 has an upstream end portion C2 connected to the main air intake passage B3 between the first and second throttle valves 69A, 69B. Further, the downstream end portion C3 of the auxiliary air intake passage C1 is connected to the chamber B1. The auxiliary air intake passage C1 serves to supply assist air, which is applied over the fuel injected from the injector 47 to promote the disintegration of the fuel. The construction of the auxiliary air intake passage defining member 91 and the auxiliary air intake passage C1 will be described later in detail.

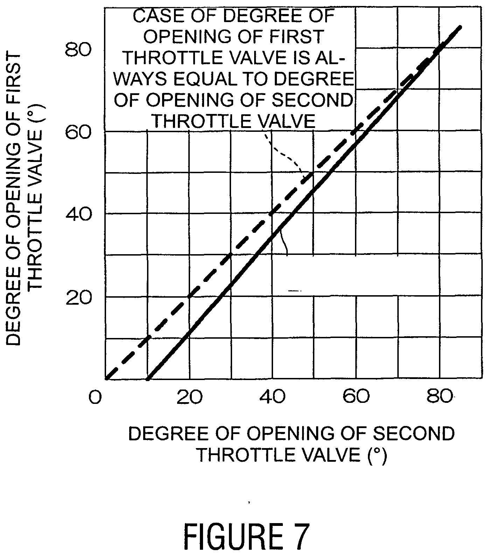

Fig. 7 is a graph showing relationships between the degree of opening of the first throttle valve 69A and the degree of opening of the second throttle valve 69B. In Fig. 7, the degree of opening of the first throttle valve 69A is zero during the idling. Similarly, the degree of opening of the second throttle valve 69B is zero during idling.

In Fig. 7, a solid line indicates a relationship between the degrees of opening of the first and second throttle valves 69A, 69B in this embodiment. As indicated by the solid line, the degree of opening of the first throttle valve 69A is kept at zero when the degree of opening of the second throttle valve 69B is not greater than 10 degrees.

On the other hand, a broken line in Fig. 7 indicates that the degree of opening of the first throttle valve is always equal to the degree of opening of the second throttle valve without the provision of the lost motion structure. As indicated by the broken line and the solid line, the first throttle valve 69A is opened with a time delay after the second throttle valve 69B is opened in this embodiment. The operations of the first and second throttle valves 69A, 69B will be described below in greater detail.

Referring to Figs. 6 and 7, the degrees of opening of the first throttle valve 69A and the second throttle valve 69B are controlled in the following manner according to a change in load (throttle operating amount). First, the first throttle valve 69A located on a downstream side with respect to the intake air flow direction E1 is maintained in a fully closed position when the vehicle is operated in an operation state ranging from a non-load operation state (idling state) to a predetermined partial load operation state.

More specifically, until the operation state reaches the partial load operation state, the rotation of the driving pulley 73 occurring due to the throttle operation performed by the rider is not transmitted to the first rotation shaft 71 but transmitted only to the second rotation shaft 72.

This is because the press member 82 of the first main link member 76 and the to-be-pressed member 83 of the rotation transmission member 79 are spaced the predetermined distance J5 from each other circumferentially of the first rotation shaft 71. At this time, the first main link member 76 is pivoted in response to the pivoting of the second main link member 77, but the rotation transmission member 79 is not pivoted.

Therefore, only the second throttle valve 69B is opened or closed by the rotation of the second rotation shaft 72. At this time, the sub-link member 78 and the first main link member 76 operate in response to the operation of the second main link member 77. Thus, the first main link member 76 is rotated about the first rotation shaft 71. However, the first rotation shaft 71 and the first throttle valve 69A are not rotated until the press member 82 of the first main link member 76 is brought into abutment against the to-be-pressed member 83.

Therefore, as shown in Figs. 3 and 6, the amount of air flowing into the injection space B2 is controlled only based on the degree of opening of the second throttle valve 69B until the operation state reaches the partial load operation state. In the partial load operation state, the assist air flowing into the auxiliary air intake passage C1 is introduced into the injection space B2 via the chamber B1 and the through-holes 55 of the holder 46. The assist air supplied into the injection space B2 is mixed with the fuel injected from the injector 47 in the injection space B2.

At this time, the injected fuel is substantially prevented from adhering onto a peripheral wall of the air intake port 32, because the injector 47 is disposed in the vicinity of the air intake valve 37. This improves the response of the engine to the throttle operation. Further, the disintegration of the fuel is promoted to increase the fuel combustion efficiency. This reduces the possibility of imperfect fuel combustion which is liable to occur at the cold start of the engine.

On the other hand, when the operation state is shifted from the partial load operation state to a higher load operation state, the first throttle valve 69A is opened according to the throttle operation.

Thus, not only the assist air flowing through the auxiliary air intake passage C1 but also the intake air flowing through the other end of the air intake port 32 is introduced into the cylinder head 22.

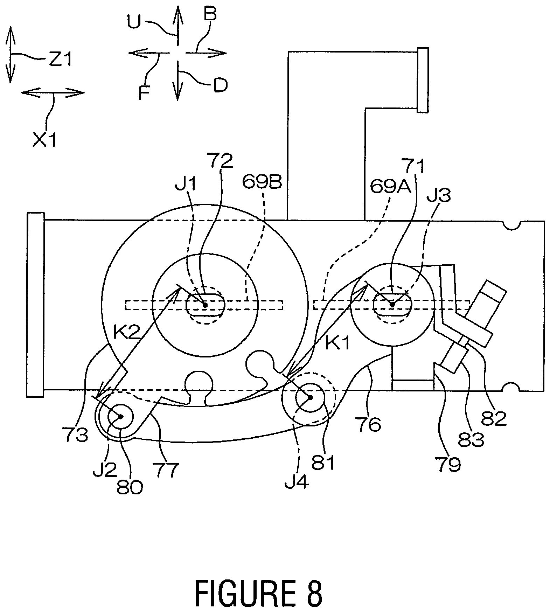

Referring to Fig. 7 and Fig. 8 which is a schematic left side view illustrating the throttle body 68 with the first throttle valve 69A and the second throttle valve 69B being fully open, more specifically, the rotation amount of the first main link member 76 with respect to a reference rotation amount observed during the idling exceeds a predetermined level when the operation state is shifted from the partial load operation state to the higher load operation state. As a result, the press member 82 of the first main link member 76 is brought into abutment against the to-be-pressed member 83 of the rotation transmission member 79. Therefore, the rotation transmission member 79 and the first rotation shaft 71 are rotated in response to the rotation of the first main link member 76, whereby the first throttle valve 69A is rotated. Thus, not only the intake air flowing through the auxiliary air intake passage C1 but also the air flowing through the connection pipe 65 is introduced into the cylinder head 22.

Since the distance K2 is greater than the distance K1 in the link mechanism 75 as described above, the opening/closing speed of the first throttle valve 69A is higher than that of the second throttle valve 69B in the higher load operation state. As a result, the first throttle valve 69A is fully opened, when the second throttle valve 69B is fully opened.

Fig. 9 is a right side view of the engine unit 13. Referring to Fig. 9, the auxiliary air intake passage defining member 91 has a length that is generally half the length of the air intake pipe 62 as measured in the direction between the front and the back (X1) of the vehicle.

The auxiliary air intake passage C1 will hereinafter be described in detail.

Referring to Fig. 2, the first boss 45 is provided as the integral part of the cylinder head 22. The injector 47 is attached to the first boss 45. The cylinder head 22 further includes a fourth boss 95 provided integrally with the first boss 45. The fourth boss 95 extends perpendicularly to an axis of the injector 47. The cylinder head 22 further includes a third boss 94 attached to the fourth boss 95.

The auxiliary air intake passage defining member 91 includes a second boss 92 fixed to the tubular member 64, the fourth boss 95 of the cylinder head 22, the third boss 94 attached to the fourth boss 95, and a hose 93 which connects the third boss 94 to the second boss 92. In this embodiment, the auxiliary air intake passage C1 includes spaces defined in the second boss 92, the hose 93, the third boss 94 and the fourth boss 95. Assist air flowing through the auxiliary air intake passage C1 is supplied to the injection space B2 (the space adjacent to the injection nozzle).

The second boss 92 is an L-shape tubular metal member. The second boss 92 includes an upstream end defining portion 97 fixed to an upper portion 96 of the tubular member 64 of the throttle body 68, and an extension portion 98 extending from the upstream end defining portion 97.

The upstream end defining portion 97 defines an upstream end portion C2 of the auxiliary air intake passage C1. The upstream end defining portion 97 is connected to the upper portion 96 of the tubular member 64 of the throttle body 68, and extends upward from the upper portion 96. Thus, the upstream end portion C2 is branched upward from the main air intake passage B3 between the first and second throttle valves 69A, 69B. The upstream end portion C2 is located at the most upstream end of the auxiliary air intake passage C1 with respect to a second flow direction E2 (assist air flow direction).

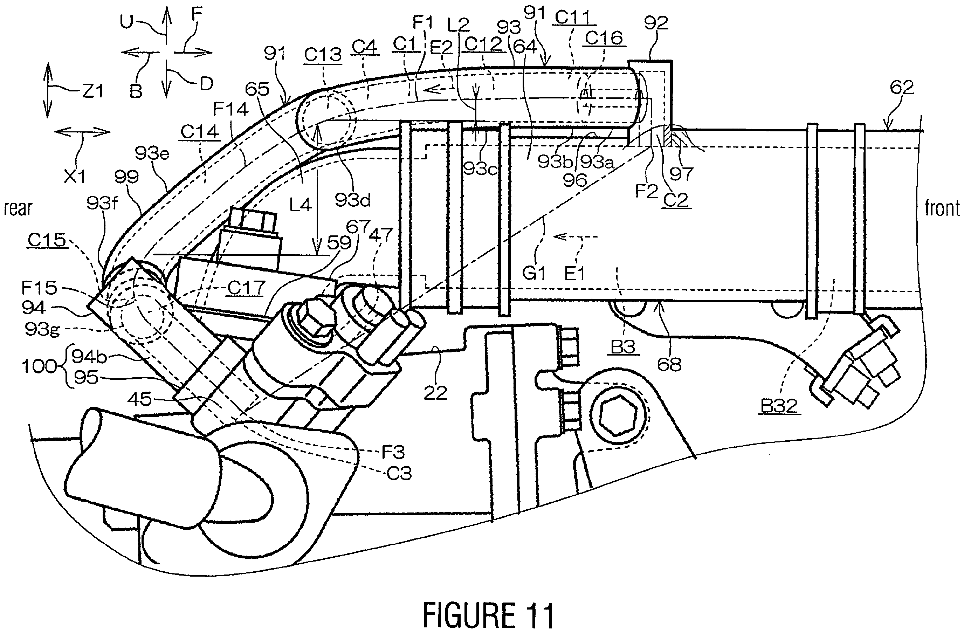

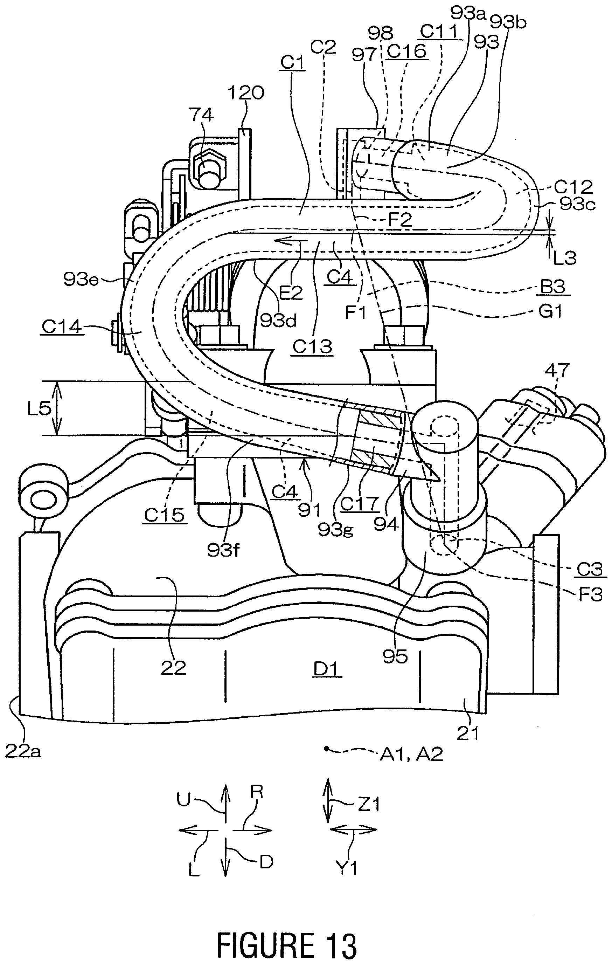

Fig. 11 is an enlarged right side view of the auxiliary air intake passage defining member 91 and its peripheral portion. Fig. 12 is an enlarged plan view of the auxiliary air intake passage defining member 91 and its peripheral portion. Fig. 13 is a rear view illustrating the auxiliary air intake passage defining member 91 and its peripheral portion as seen from the back side of the vehicle.

Referring to Fig. 12, the auxiliary air intake passage defining member 91 includes an intermediate portion 99. The extension portion 98 of the second boss 92 partly defines the intermediate portion 99. The extension portion 98 extends perpendicularly to the upstream end defining portion 97. The extension portion 98 is inclined downward in the second flow direction E2. The auxiliary air intake passage C1, which ranges from an inside space of the extension portion 98 to the downstream end portion C3, is inclined downward in the second flow direction E2. The extension portion 98 extends obliquely in the rearward and rightward directions with respect to the upstream end defining portion 97.

The hose 93 is composed of a flexible material such as rubber, and partly defines the intermediate portion 99. The hose 93 is located between the upstream end defining portion 97 and the third boss 94 in the direction between the front and the back (X1) of the vehicle. The hose 93 is located between a left side surface 22a of the cylinder head 22 and the holder 46 for the injector 47 in the lateral direction (Y1) of the vehicle.

Referring to Figs. 12 and 13, the hose 93 is located between the upstream end defining portion 97 and the third boss 94 vertically (Z1) of the vehicle.

The hose 93 includes a first connection portion 93a, a first portion 93b, a second portion 93c, a third portion 93d, a fourth portion 93e, a fifth portion 93f and a second connection portion 93g, which are arranged in this order in the second flow direction E2.

The first connection portion 93a is fitted around the extension portion 98 of the second boss 92, and fixed to the extension portion 98 by a hose clip not shown.

A portion of the auxiliary air intake passage defining member 91 ranging from the extension portion 98 to the second connection portion 93g extends in the downward and downstream directions in the second flow direction E2.

The first portion 93b has a fan shape as a whole. The first portion 93b extends obliquely in the rearward and rightward directions from the first connection portion 93a. The first portion 93b is located on a right side of a junction between the tubular member 64 and the connection pipe 65 as seen in plan. The first portion 93b defines a first region C11 of the auxiliary air intake passage C1.

The second portion 93c has a U-shape as a whole. The second portion 93c is curved convexly rightward as seen in plan. The second portion 93c is located above the injector 47. The second portion 93c defines a second region C12 of the auxiliary air intake passage C1.

The third portion 93d has a generally linear shape. The third portion 93d extends generally to the left from the second portion 93c. The third portion 93d crosses a plane G2 to be described later. The third portion 93d defines a third region C13 of the auxiliary air intake passage C1.

The fourth portion 93e has a U-shape as a whole. As seen in plan, the fourth portion 93e is curved convexly to the left as a whole, and is located on the left side of the vehicle center axis A1. The fourth portion 93e extends rearward from the third portion 93d. The fourth portion 93e defines a fourth region C14 of the auxiliary air intake passage C1. The fourth portion 93e has a curvature radius R4 that is greater than the curvature radius R2 of the second portion 93c (R4 > R2).

The fifth portion 93f has a linear shape as a whole. The fifth portion 93f extends to the right from the fourth portion 93e. The fifth portion 93f extends across the vehicle center axis A1 and the cylinder axis A2 as seen in plan. The fifth portion 93f defines a fifth region C15 of the auxiliary air intake passage C1.

The second connection portion 93g has a linear shape as a whole, and extends to the right from the fifth portion 93f.

Referring to Figs. 11 and 13, the first connection portion 93a, the first portion 93b, the second portion 93c, the third portion 93d and the fourth portion 93e are disposed above the tubular member 64 and the connection pipe 65. The fourth region C14 of the auxiliary air intake passage C1 defined by the fourth portion 93e has a height difference L4 that is greater than the height difference L2 of the second region C12 of the auxiliary air intake passage C1 defined by the second portion 93c (L4 > L2) .

As seen from the right side, the hose 93 is disposed along the tubular member 64 and the connection pipe 65. As seen from the rear side, the hose 93 overlaps the tubular member 64 and the connection pipe 65 in the direction between the front and the back (X1) of the vehicle.

The fifth portion 93f of the hose 93 has a downward inclination that is greater than the downward inclination of the third portion 93d as measured per unit of length in the flow direction E2. Therefore, the fifth region C15 of the auxiliary air intake passage C1 defined by the fifth portion 93f has a height difference L5 that is greater than the height difference L3 of the third region C13 of the auxiliary air intake passage C1 defined by the third portion 93d (L5 > L3).

Referring to Figs. 3 and 12, the third boss 94 is an L-shaped metal member, and partly defines the intermediate portion 99. The third boss 94 includes a first portion 94a and a second portion 94b disposed perpendicularly to each other. The first portion 94a extends in the lateral direction (Y1) of the vehicle. The second connection portion 93g of the hose 93 is connected to the first portion 94a of the third boss 94. The second connection portion 93g extends generally in a perpendicular manner to the plane G2 to be described later. The second portion 94b extends generally in a perpendicular manner to a center axis J6 of the injection space B2.

With the aforementioned arrangement, the intermediate portion 99 includes the extension portion 98 of the second boss 92, the hose 93 and the first portion 94a of the third boss 94. The intermediate portion 99 defines an intermediate region C4 of the auxiliary air intake passage C1 ranging from the upstream end portion C2 to the downstream end portion C3. The intermediate region C4 includes a space C16 defined in the extension portion 98, the first to fifth regions C11 to C15 defined in the hose 93, and a space C17 defined in the first portion 94a of the third boss 94.

The fourth boss 95 partly defines the downstream end portion C3 of the auxiliary air intake passage C1. The fourth boss 95 is provided integrally with the first boss 45, and has a tubular shape. The fourth boss 95 extends generally in a perpendicular manner to the center axis J6 of the injection space B2. The second portion 94b of the third boss 94 is fixed to the fourth boss 95. The downstream end portion C3 communicates with the chamber B1. The second portion 94b of the third boss 94 and the fourth boss 95 collectively define a downstream end defining portion 100 that defines the downstream end portion C3.

With the aforementioned arrangement, the auxiliary air intake passage C1 is circular in section taken perpendicularly to the second flow direction E2 throughout the length thereof. The auxiliary air intake passage C1 has a center axis F1 extending from the upstream end portion C2 to the downstream end portion C3 through centers of the sections thereof.

Referring to Figs. 2 and 12, a line segment G1 is defined, which extends from the most upstream end F2 to the most downstream end F3 of the center axis F1 of the auxiliary air intake passage C1 with respect to the second flow direction E2 so as to have a minimum length. Further, the plane G2 is defined as containing the line segment G1. The plane G2 extends parallel to a vehicle vertical direction Z1 and, for example, is a vertical plane. As seen in plan, the line segment G1 is located on the right side of the vehicle center axis A1, and extends in the rearward and rightward directions. As seen from the right side, the line segment G1 is inclined in the downward and rearward directions. With this arrangement, there is a height difference between the upstream end portion C2 and the downstream end portion C3 of the auxiliary air intake passage C1.

Referring to Fig. 12, a center axis F13 of the third region C13 of the auxiliary air intake passage C1 crosses the plane G2 in a generally perpendicular manner.

Further, a center axis F11 of the first region C11, a center axis F12 of the second region C12 and a center axis F14 of the fourth region C14 of the auxiliary air intake passage C1 are each curved so as to have an arcuate shape (curved portions) . The center axis F11 of the first region C11 and the center axis F12 of the second region C12 of the auxiliary air intake passage C1 are located on the right side of the plane G2. On the other hand, the center axis F14 of the fourth region C14 of the auxiliary air intake passage C1 is located on the left side of the plane G2. Therefore, the center axes F11, F12, F14 (curved portions) are located on opposite sides of the plane G2.

When the auxiliary air intake passage defining member 91 is seen in plan, i.e., from a side thereof opposite from the engine body 14, the third portion 93d and the fifth portion 93f of the hose 93 of the intermediate portion 99 each extend across the cylinder axis A2 (the center axis of the engine body 14). The third portion 93d and the fifth portion 93f are provided as linear portions of the intermediate portion 99.

Referring to Fig. 13, when the auxiliary air intake passage defining member 91 is seen from the rear side, i.e., from a side thereof opposite from the cylinder head 22, the auxiliary air intake passage defining member 91 is located within a region D1 in which other components of the engine unit 13 than the auxiliary air intake passage defining member 91 are accommodated. More specifically, the upstream end defining portion 97 (an upper end of the auxiliary air intake passage defining member 91) is located at a lower position than a bracket 120 supporting the throttle cable 74 as seen from the rear side.

Further, the fourth boss 95 (a lower end of the auxiliary air intake passage defining member 91) is located in an upper portion of the cylinder head 22 as seen from the rear side. The fourth portion 93e of the hose 93 (a left end of the auxiliary air intake passage defining member 91) is located to the right of a left side surface 22a of the cylinder head 22 as seen from the rear side. The second portion 93c of the hose 93 (a right end of the auxiliary air intake passage defining member 91) is located to the left of the injector 47 as seen from the rear side.

This embodiment has the following functions and effects. With the center axis F1 of the auxiliary air intake passage C1 crossing the plane G2, the auxiliary air intake passage C1 meanders. Thus, the auxiliary air intake passage C1 has a sufficiently great length. Therefore, the resistance of fluid flow from the injection space B2 to the auxiliary air intake passage C1 is sufficiently increased. Even if the turbulent flow of the fuel occurs in the injection space B2, the fuel is less liable to intrude into the auxiliary air intake passage C1.

The arrangement for preventing the turbulent flow of the fuel toward the auxiliary air intake passage C1 can be easily provided at lower costs simply by causing the auxiliary air intake passage C1 to meander. Further, the length of the auxiliary air intake passage C1 is sufficiently increased by causing the auxiliary air intake passage C1 to meander, rather than by locating the two throttle valves 69A, 69B apart from the cylinder head 22. This obviates the need for increasing distances. So, there is no need to lengthen a linear distance between the first and second throttle valves 69A, 69B and the combustion chamber B4. Therefore, the engine is highly responsive to the throttle operation.

If the fuel intrudes into the auxiliary air intake passage C1 due to the turbulent flow, the intruding fuel flows toward the combustion chamber B4 irrespective of the fuel injection control of the injector 47. This results in variations in the amount of fuel to be supplied to the combustion chamber B4. In this embodiment, however, the turbulent flow of the fuel is suppressed, thereby suppressing the variations.

The fuel flow resistance in the auxiliary air intake passage C1 is not increased by reducing the sectional area of the auxiliary air intake passage C1. Therefore, a sufficient flow rate of the intake air can be reliably provided.

The center axis F1 of the auxiliary air intake passage C1 is curved on three portions thereof, i.e., on the center axis F11 of the first region C11, the center axis F12 of the second region C12, and the center axis F14 of the fourth region C14. Therefore, the curved auxiliary air intake passage C1 has a further great fluid flow resistance. This reliably suppresses the intrusion of fuel into the auxiliary air intake passage C1 due to the turbulent flow.

The first region C11, the second region C12 and the fourth region C14 are disposed on the opposite sides of the plane G2. This provides a sufficient fluid flow resistance in the auxiliary air intake passage C1 on the opposite sides of the plane G2. Therefore, the auxiliary air intake passage defining member 91 can be compactly provided without the need for increasing the length of the auxiliary air intake passage C1 on one of the opposite sides of the plane G2.

Further, there is a height difference between the upstream end portion C2 and the downstream end portion C3 of the auxiliary air intake passage C1 with respect to the second flow direction E2. The plane G2 extends parallel to the vehicle vertical direction Z1 and, for example, is a vertical plane. At least the third region C13 of the auxiliary air intake passage C1 ranging from the upstream end portion C2 side to the downstream end portion C3 side crosses the plane G2.

Thus, the auxiliary air intake passage C1 is three-dimensionally curved. Even if the line segment G1 extending between the opposite ends of the auxiliary air intake passage C1 has a short length, sufficient fluid flow resistance can be provided in the auxiliary air intake passage C1. Therefore, it is possible to locate the throttle body 68 closer to the combustion chamber B4. This further improves the engine response to the throttle operation.

The upstream end defining portion 97 of the auxiliary air intake passage defining member 91 is connected to the upper portion 96 of the tubular member 64 of the throttle body 68. Even if water is condensed on an interior surface of the tubular member 64, the condensed water is substantially prevented from being sucked into the auxiliary air intake passage C1. The auxiliary air intake passage defining member 91, which is connected to the upper portion 96 of the tubular member 64, has a greater height difference. As a result, the auxiliary air intake passage C1 inclined in the downward and downstream directions in the second flow direction E2 is easily provided.

The tubular member 64 of the throttle body 68 is located above the engine body 14, and the injector 47 is disposed in the upper portion of the cylinder head 22. Thus, the upstream end defining portion 97 and the downstream end defining portion 100 of the auxiliary air intake passage defining member 91 are located on the upper side of the engine body 14. Therefore, the hose 93 of the auxiliary air intake passage defining member 91 can be easily mounted in the engine unit 13.

A portion of the auxiliary air intake passage C1 except for the upstream end portion C2 is inclined in the downward and downstream directions in the second flow direction E2. Thus, even if the fuel happens to intrude into the auxiliary air intake passage C1, the fuel can be quickly expelled from the auxiliary air intake passage C1 by gravity at engine stop. This prevents degradation of the fuel which may otherwise occur due to accumulation of the fuel in the auxiliary air intake passage C1.

As seen from the rear side, the auxiliary air intake passage defining member 91 is located within the region D1 in which other components of the engine unit 13 than the auxiliary air intake passage defining member 91 are accommodated. Therefore, the engine unit 13 requires a smaller accommodation space, and has a compact size.

The first portion 94a of the third boss 94 of the intermediate portion 99 is connected to the second portion 94b of the third boss 94 so as to extend in a generally perpendicular manner to the plane G2. Thus, the second connection portion 93g of the intermediate portion 99 extends generally linearly from the second portion 94b of the third boss 94 in a generally perpendicular manner to the plane G2, and curved. This makes it possible to curve the auxiliary air intake passage C1 to an increased extent with the length of the line segment G1 kept shorter. With the first and second throttle valves 69A, 69B being located closer to the combustion chamber B4, the engine unit 13 is highly responsive to the throttle operation. Further, the auxiliary air intake passage C1 has a higher air flow resistance, thereby suppressing the intrusion of fuel due to the turbulent flow.

As seen in plan, the third region C13 and the fifth region C15 of the hose 93, which are linear portions of the intermediate portion 99, extend across the cylinder axis A2. Thus, the third and fifth linear regions C13, C15 each have a sufficiently great length, making it easy to provide a sufficiently high fluid flow resistance in the auxiliary air intake passage C1.

Thus, unintended fuel supply to the combustion chamber B4 is suppressed, which may otherwise be caused by the intrusion of fuel into the auxiliary air intake passage C1 due to the turbulent flow. This makes it possible to achieve a desired fuel combustion state . In addition, the motorcycle 1 is excellent in engine response to the throttle operation.

### Second Embodiment

A second embodiment of the present invention will hereinafter be described with reference to the attached drawings. In the following description, directions between the front and the back, vertical directions and lateral (transverse) directions are defined on the basis of a reference position of a motorcycle 200 which travels straight ahead on a horizontal plane as seen from a viewpoint of a forward-facing rider of the motorcycle.

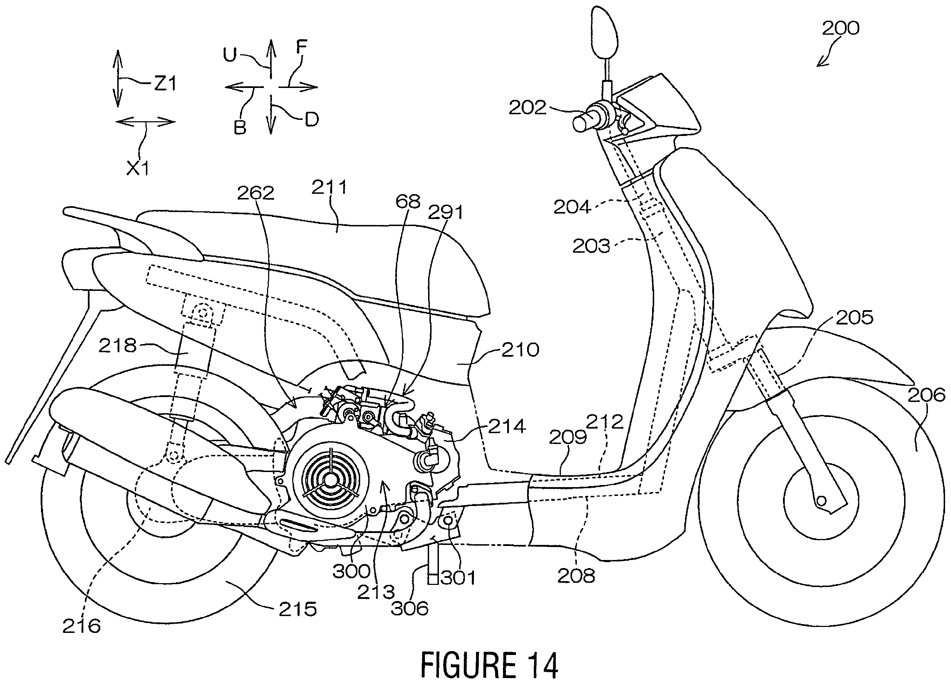

The second embodiment is different from the first embodiment in the construction of the vehicle 200 and the construction of the engine. Like components will be denoted by like reference numerals, and duplicate description of the construction, the functions and the effects will be omitted. Fig. 14 is a right side view of the motorcycle 200 according to the second embodiment. The motorcycle 200 includes a handlebar 202 provided in a front portion thereof. The handlebar 202 is connected to a front wheel 206 via a steering shaft 204 extending through a head pipe 203.

The motorcycle 200 includes a vehicle body frame 208. The vehicle body frame 208 extends in the direction between the front and the back (X1) of the vehicle as a whole. The head pipe 203 is connected to a front end of the vehicle body frame 208. A seat 211 is attached to a rear portion of the vehicle body frame 208. A foot rest plate 209 is attached to a portion of the vehicle body frame 208 in front of the seat 211. A vehicle body cover 210 is attached to the vehicle body frame 208 as extending upward from a rear portion of the foot rest plate 209 to surround a lower space present below the seat 211. A side stand 306 is attached to the vehicle body frame 208. The side stand 306 serves to support the vehicle body frame 208 when the motorcycle 200 is parked.

A unit-swing engine unit 213 is mounted on the vehicle body frame 208.

The engine unit 213 is of a forced air-cooled type. The engine unit 213 includes an engine body 214, an air intake pipe 262, a throttle body 68, an auxiliary air intake passage defining member 291, and a shroud 300.

A crank case 220 (to be described later) of the engine body 214 and the vehicle body frame 208 are connected to each other via a pivot shaft 301 having an axis extending in the lateral direction (Y1) of the vehicle. A rear wheel 215 is attached to a rear portion of the engine unit 213 via a power transmission member 216. A rear shock absorber 218 is provided between a rear portion of the power transmission member 216 and the vehicle body frame 208. With this arrangement, the engine unit 213 is supported by the vehicle body frame 208 so as to be vertically pivotable together with the rear wheel 215 about the pivot shaft 301 with respect to the vehicle body frame 208.

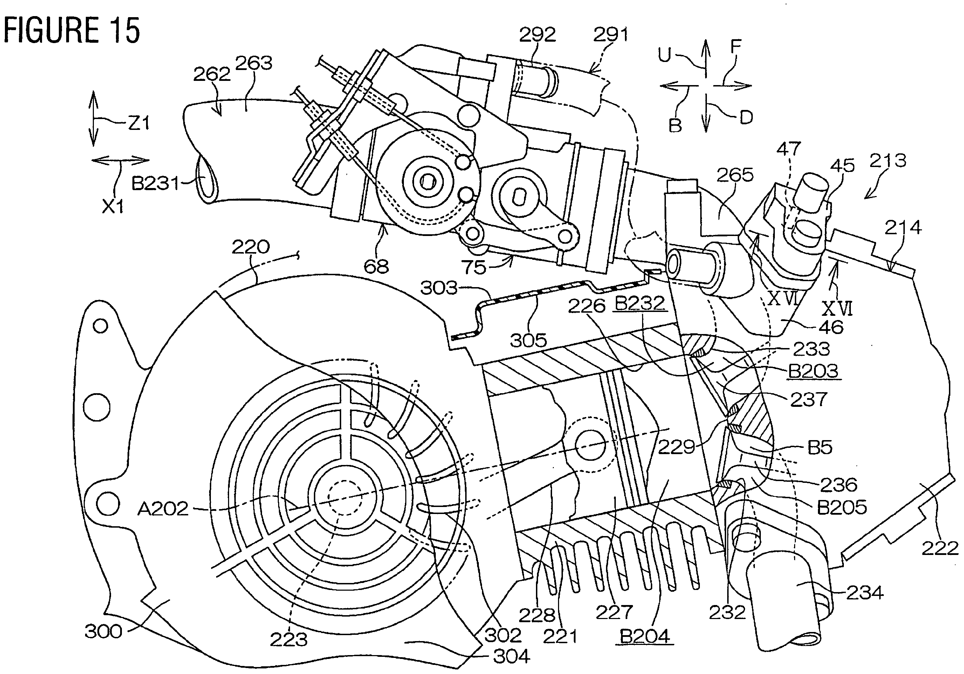

Fig. 15 is a right side view illustrating the engine unit 213 partly in section. The engine body 214 is disposed with its cylinder axis A202 extending generally horizontally forward. The engine body 214 includes the crank case 220, a cylinder block 221, and a cylinder head 222. A crank shaft 223 is accommodated in the crank case 220. The cylinder block 221 and the cylinder head 222 are disposed in this order in front of a front wall of the crank case 220. The crank case 220, the cylinder block 221 and the cylinder head 222 are connected to one another by means of bolts or the like.

A piston 227 is accommodated in a slidable manner in a cylinder bore 226 of the cylinder block 221. The piston 227 is connected to the crank shaft 223 via a connecting rod 228. A fan 302 is connected to the crank shaft 223. The fan 302 is driven by rotation of the crank shaft 223. Air is introduced as cooling wind into the shroud 300 from the outside by the fan 302 for cooling the engine body 214. The cylinder head 222 has a combustion recess 229. The combustion recess 229 joins with the cylinder bore 226 in the cylinder head 222. A combustion chamber B204 is defined between the combustion recess 229 of the cylinder head 222, the cylinder bore 226 and the piston 227.

The cylinder head 222 has an exhaust port 232 and an air intake port 233. One of opposite ends of the exhaust port 232 opens in the combustion recess 229, thereby communicating with the combustion chamber B204. One of opposite ends of the air intake port 233 also opens in the combustion recess 229, thereby communicating with the combustion chamber B204. The exhaust port 232 defines a part of an exhaust passage B205 present in the cylinder head 222. The exhaust passage B205 extends downward in the cylinder head 222. The exhaust passage B205 communicates with an exhaust passage defined in an exhaust pipe 234. On the other hand, the air intake port 232 defines a portion B232 of a main air intake passage B203 present in the cylinder head 222.

The one end of the exhaust port 232 is opened and closed by an exhaust valve 236 provided in the cylinder head 222 in accordance with a predetermined timing. Similarly, the one end of the air intake port 233 is opened and closed by an air intake valve 237 provided in the cylinder head 222 in accordance with a predetermined timing.

The shroud 300 includes a tubular portion 303 which surrounds the entire cylinder block 221, and the entire rear end portion of the cylinder head 222, and a side plate 304 which covers the crank case 220 from the right side of the crank case 220. The tubular portion 303 includes an upper wall 305 disposed above the engine body 214. The upper wall 305 covers an upper surface of the cylinder block 221.

An injector 47 (fuel injection device) is disposed in the vicinity of the air intake port 233 in a right upper portion of the cylinder head 222.

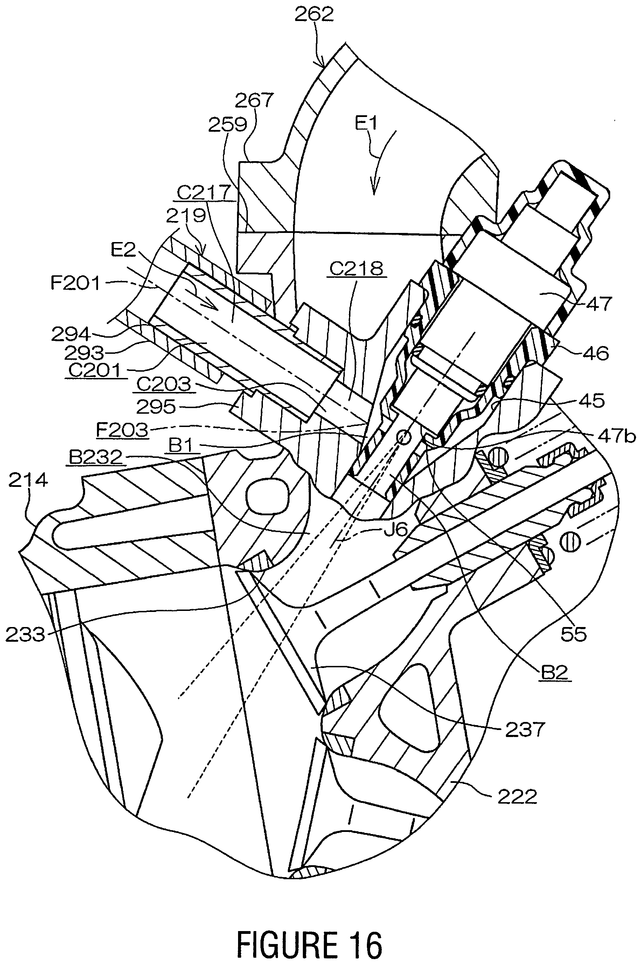

Fig. 16 is a sectional view taken along a line XVI-XVI in Fig. 15. Referring to Fig. 16, a part of the injector 47 is accommodated in a first boss 45 of the cylinder head 222.

The first boss 45 is an integral part of the cylinder head 222, and the injector 47 is fixed in the first boss 45. An inside space of the first boss 45 communicates with the air intake port 233. The injector 47 is attached to the first boss 45 via a synthetic resin holder 46.

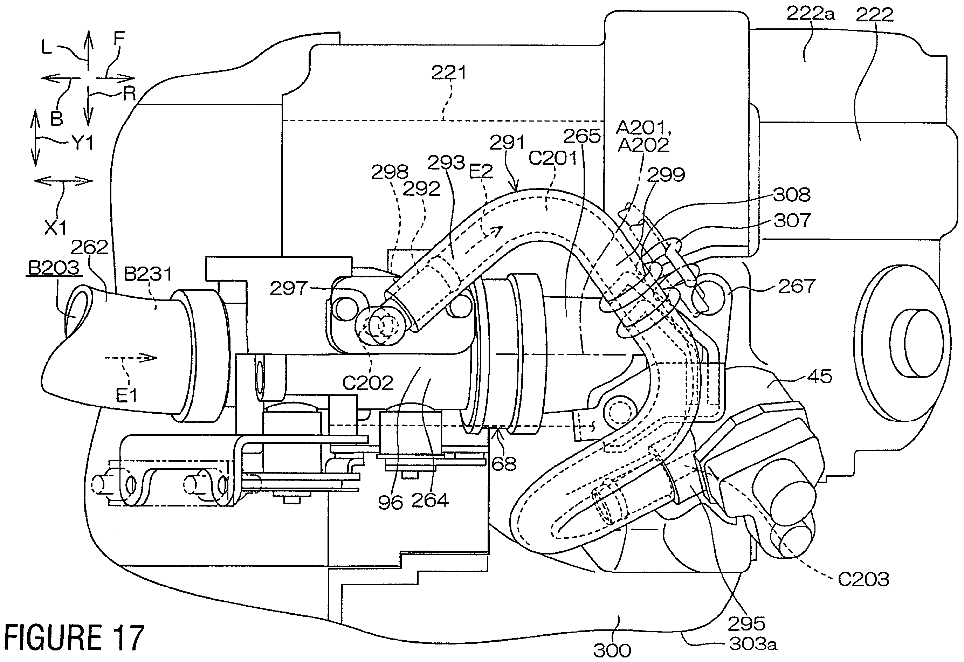

Fig. 17 is a plan view of the engine unit 213. Referring to Figs. 16 and 17, an engine side flange 259 is provided on an upper surface of the cylinder head 222. As seen in plan, the engine side flange 259 has a center axis extending across a vehicle center axis A201, which is defined with respect to a vehicle transverse axis Y1. The main air intake passage portion B232 present in the cylinder head 222 extends upward in the cylinder head 222. One of opposite ends of the main air intake passage portion B232 in the cylinder head 222 is defined by the engine side flange 259. As seen in plan, the vehicle center axis A201 is aligned with the cylinder axis A202.

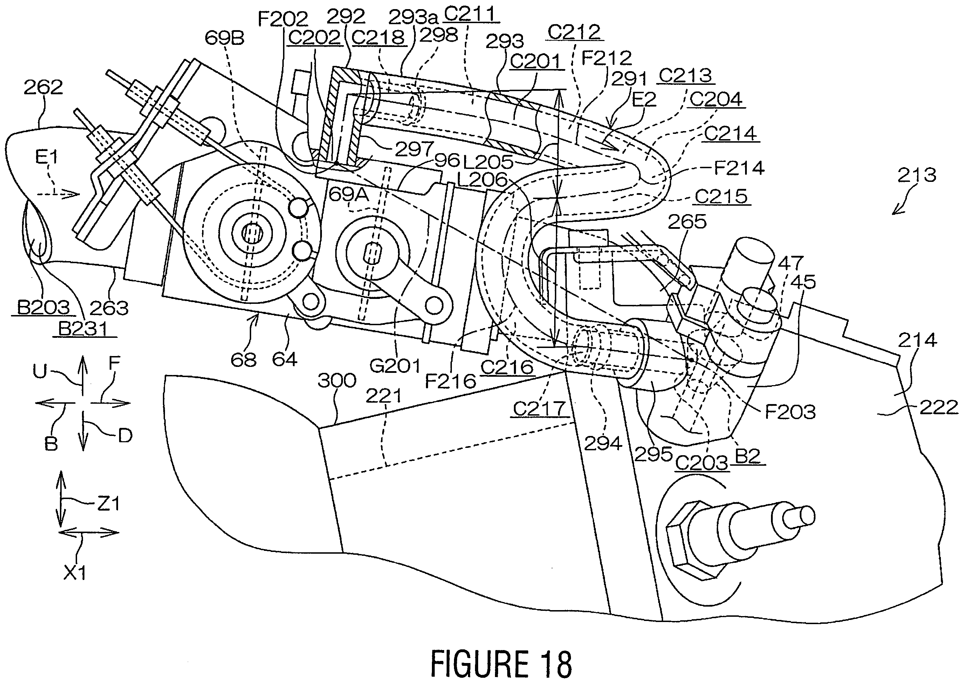

Fig. 18 is a right side view illustrating major portions of the engine unit 213. Referring to Fig. 18, the air intake pipe 262 defines a portion B231 of the main air intake passage B203. The air intake pipe 262 is inclined in the downward and forward directions. The air intake pipe 262 includes an air intake hose 263 connected to an air cleaner (not shown) and extending forward from the air cleaner, a tubular member 64 connected to a front end portion of the air intake hose 263, and a connection pipe 265 connected to a front end portion of the tubular member 64 and curved in the downward direction.

As seen in plan, the tubular member 64 and the connection pipe 265 extend generally along the vehicle center axis A201.

As seen from the right side of the motorcycle 200, the tubular member 64 and the connection pipe 265 are inclined in the downward and forward directions.

Referring to Figs. 16 and 18, an air intake pipe side flange 267 of the connection pipe 265 abuts against the engine side flange 259, and is fixed to the engine side flange 259 by fixture screws. Thus, the main air intake passage portion B232 in the cylinder head 222 and the main air intake passage portion B231 in the air intake pipe 262 communicate with each other to provide the main air intake passage B203 as a whole.

As described above, the engine unit 213 includes the throttle body 68. The tubular member 64, which also serves as a part of the throttle body 68, is disposed above the cylinder block 221 of the engine body 214 and above the shroud 300.

The main air intake passage B203 in the air intake pipe 262 is opened and closed by first and second throttle valves 69A, 69B.

As described above, the engine unit 213 includes the auxiliary air intake passage defining member 291. The auxiliary air intake passage defining member 291 defines an auxiliary air intake passage C201. Air is introduced into an injection space B2 through the auxiliary air intake passage C201 at least during idling. The auxiliary air intake passage C201 has an upstream end portion C202 connected to a portion of the main air intake passage B203 between the first and second throttle valves 69A, 69B in the air intake pipe 262. The auxiliary air intake passage C201 further has a downstream end portion C203 connected to a chamber B1. The auxiliary air intake passage C201 serves to supply assist air, which is applied over a fuel injected from the injector 47 to promote the disintegration of the fuel.

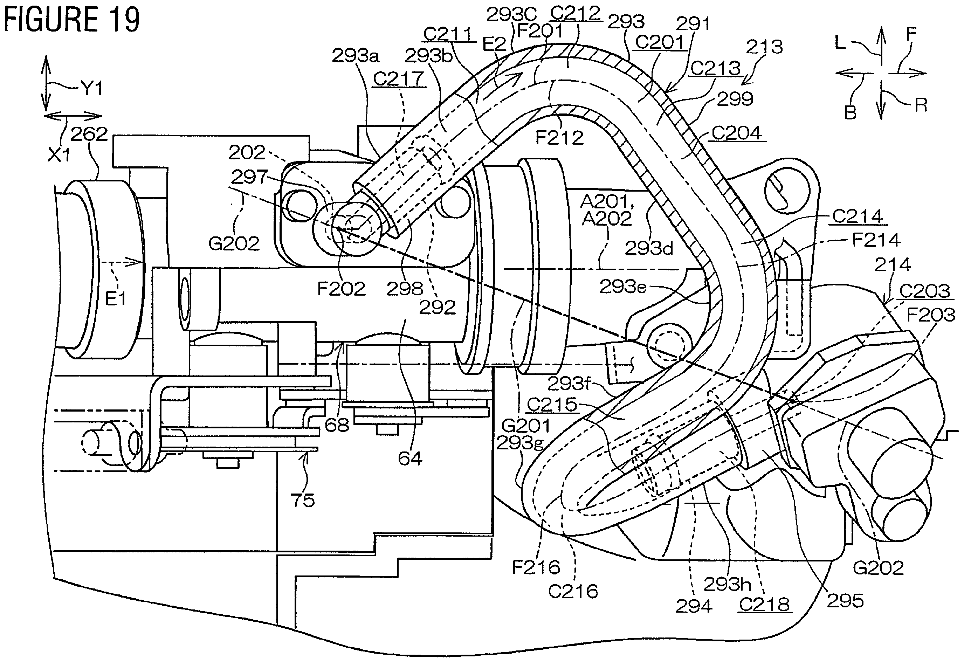

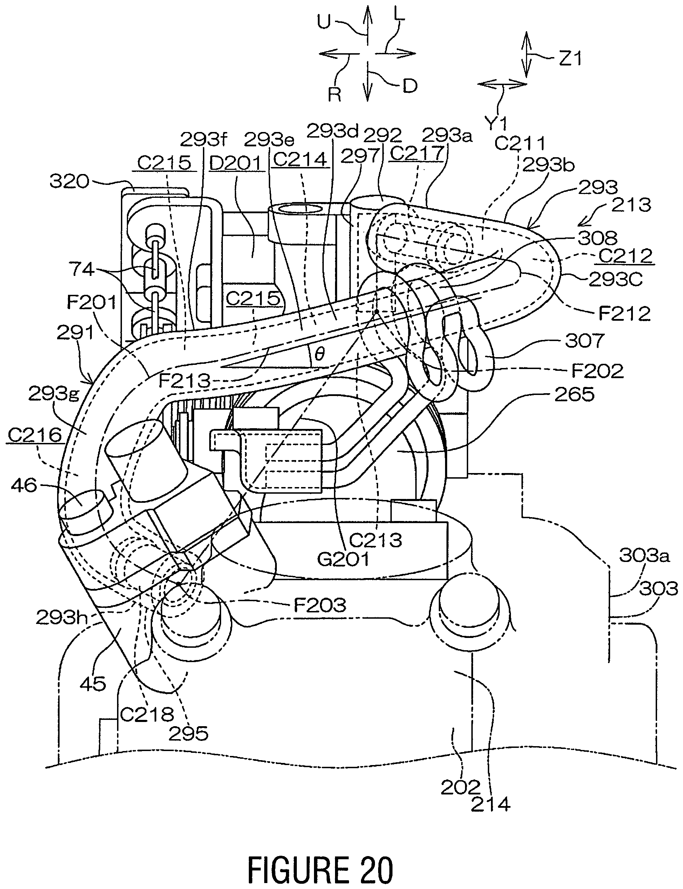

Fig. 19 is a plan view of the engine unit 213 around the auxiliary air intake passage defining member 291. Fig. 20 is a front view of the engine unit 213 around the auxiliary air intake passage defining member 291.

Referring to Fig. 18, the first boss 45 is provided as the integral part of the cylinder head 222. The injector 47 is attached to the first boss 45. The cylinder head 222 further includes a downstream end defining portion 295 provided integrally with the first boss 45. The downstream end defining portion 295 extends perpendicularly to an axis of the injector 47. The cylinder head 222 further includes a third boss 294 attached to the downstream end defining portion 295. The auxiliary air intake passage defining member 291 includes a second boss 292 fixed to the tubular member 64, the downstream end defining portion 295 of the cylinder head 222, the third boss 294 attached to the downstream end defining portion 295, and a hose 293 connecting the third boss 294 to the second boss 292. In this embodiment, the auxiliary air intake passage C201 includes spaces defined in the second boss 292, the hose 293, the third boss 294 and the downstream end defining portion 295. Assist air flowing through the auxiliary air intake passage C201 is supplied into the injection space B2 (the space adjacent to the injection nozzle).

The second boss 292 is an L-shaped metal pipe. The second boss 292 includes an upstream end defining portion 297 fixed to an upper portion 96 of the tubular member 64 of the throttle body 68, and an extension portion 298 extending from the upstream end defining portion 297.

The upstream end defining portion 297 defines the upstream end portion C202 of the auxiliary air intake passage C201. The upstream end defining portion 297 is connected to the upper portion 96 of the tubular member 64 of the throttle body 68, and extends upward from the upper portion 96. Thus, the upstream end portion C202 is branched upward from the main air intake passage B203 between the first and second throttle valves 69A, 69B. The upstream end portion C202 is located at the most upstream end side of the auxiliary air intake passage C201 with respect to a second flow direction E2 (assist air flow direction in the auxiliary air intake passage C201).

Referring to Fig. 17, the auxiliary air intake passage defining member 291 includes an intermediate portion 299. The extension portion 298 partly defines the intermediate portion 299. The extension portion 298 extends perpendicularly to the upstream end defining portion 297. The extension portion 298 extends obliquely in the forward and leftward directions with respect to the upstream end defining portion 297. The extension portion 298 is inclined in the downward and forward directions.

The hose 293 is composed of a flexible material such as rubber, and partly defines the intermediate portion 299. The hose 293 is located between the upstream end defining portion 297 and the first boss 45 in the direction between the front and the back (X1) of the vehicle. The hose 293 is located between a left side surface 222a of the cylinder head 222 and a right side surface 303a of the tubular portion 303 of the shroud 300 in the lateral direction (Y1) of the vehicle.

Referring to Figs. 19 and 20, a portion of the auxiliary air intake passage C201 extending from the extension portion 298 in the second flow direction E2 is entirely inclined in the downward and downstream directions in the second flow direction E2. The hose 293 is located between the upstream end defining portion 297 and the first boss 45 vertically (Z1) of the vehicle.

The hose 293 includes a first connection portion 293a, a first portion 293b, a second portion 293c, a third portion 293d, a fourth portion 293e, a fifth portion 293f, a sixth portion 293g, and a second connection portion 293h, which are arranged in this order in the second flow direction E2.

The first connection portion 293a is fitted around the extension portion 298 of the second boss 292, and fixed to the extension portion 298 by a hose clip not shown.

The hose 293 ranging from the first connection portion 293a to the second connection portion 293h extends in the downward and downstream directions in the second flow direction E2. Thus, the entire part of the intermediate portion 299 extends in the downward and downstream directions with respect to the second flow direction E2.

The first portion 293b has a linear shape as a whole. The first portion 293b extends in the forward and leftward directions from the first connection portion 293a. The first portion 293b is located on a left side of a junction between the tubular member 64 and the connection pipe 265 as seen in plan. The first portion 293b defines a first region C211 of the auxiliary air intake passage C201.

The second portion 293c has an L-shape as a whole. The second portion 293c is curved convexly to the left as seen in plan. The second portion 293c defines a second region C212 of the auxiliary air intake passage C201.

The third portion 293d has a generally linear shape. The third portion 293d extends in the forward and rightward directions. The third portion 293d defines a third region C213 of the auxiliary air intake passage C201.

The fourth portion 293e has an L-shape as a whole. As seen in plan, the fourth portion 293e is curved convexly forward as a whole. The fourth portion 293e extends rearward from the third portion 293d. The fourth portion 293e perpendicularly crosses a plane G202 to be described later. The fourth portion 293e defines a fourth region C214 of the auxiliary air intake passage C201.

Referring to Figs. 18 and 19, the fifth portion 293f has a generally linear shape as a whole. The fifth portion 293f extends in the rearward and rightward directions from the fourth portion 293e. The fifth portion 293f defines a fifth region C215 of the auxiliary air intake passage C201.

The sixth portion 293g has a U-shape as a whole. As seen in the lateral direction (Y1) of the vehicle, the sixth portion 293g is curved convexly rearward as a whole. The sixth portion 293g defines a sixth region C216 of the auxiliary air intake passage C201.

The second connection portion 293h has a generally linear shape, and extends in the forward and leftward directions from the sixth portion 293g.

Referring to Figs. 18 and 20, the first connection portion 293a, the first to fifth portions 293b to 293f are disposed just above the tubular member 64 and the connection pipe 265. A portion of the auxiliary air intake passage C201 defined in the sixth portion 293g has a height difference L206 that is greater than the height difference L205 of a portion of the auxiliary air intake passage C201 defined by the first connection portion 293a and the first to fifth portions 293b to 293f (L206 > L205).

As seen from the right side, the hose 293 is disposed adjacent to the tubular member 64 and the connection pipe 265.

Referring to Figs. 16 and 19, the third boss 294 is a tubular metal member, and partly defines the intermediate portion 299. The third boss 294 extends perpendicularly to a center axis J6 of the injection space B2. The second connection portion 293h of the hose 293 is connected to the third boss 294. The third boss 294 is inclined in the downward and downstream directions in the second flow direction E2.

With the aforementioned arrangement, the intermediate portion 299 includes the extension portion 298 of the second boss 292, the hose 293 and the third boss 294. The intermediate portion 299 defines an intermediate region C204 of the auxiliary air intake passage C201 ranging from the upstream end portion C202 to the downstream end portion C203. The intermediate region C204 includes a space C217 defined in the extension portion 298, the first to sixth regions C211 to C216 defined in the hose 293, and a space C218 defined in the third boss 294.

The downstream end defining portion 295 defines the downstream end portion C203 of the auxiliary air intake passage C201. The downstream end defining portion 295 is provided integrally with the first boss 45, and has a tubular shape. The downstream end defining portion 295 extends generally in a perpendicular manner to the center axis J6 of the injection space B2 and in the downward and downstream directions in the second flow direction. The downstream end portion C203 communicates with the chamber B1.

With the aforementioned arrangement, the auxiliary air intake passage C201 is circular in section taken perpendicularly to the second flow direction E2 throughout the length thereof. The auxiliary air intake passage C201 has a center axis F201 that extends from the upstream end portion C202 to the downstream end portion C203 through centers of the sections thereof.

Referring to Figs. 18 and 19, a line segment G201 is defined, which extends with a minimal length from the most upstream end F202 to the most downstream end F203 of the center axis F201 of the auxiliary air intake passage C201 with respect to the second flow direction E2. Further, the plane G202 is defined as containing the line segment G201. The plane G202 extends parallel to a vehicle vertical axis (Z1) and is, for example, a vertical plane. As seen in plan, the line segment G201 is located on the right side of the vehicle center axis A201, and extends obliquely in the forward and rightward directions. As seen from the right side, the line segment G201 is inclined in the downward and forward directions. With this arrangement, there is a height difference between the upstream end portion C202 and the downstream end portion C203 of the auxiliary air intake passage C201.

A center axis F214 of the fourth region C214 of the auxiliary air intake passage C201 crosses the plane G202.

Further, a center axis F212 of the second region C212, the center axis F214 of the fourth region C214 and a center axis F216 of the sixth region C216 of the auxiliary air intake passage C201 are each curved so as to have an arcuate shape (curved portions). The center axis F212 of the second region C212 and the center axis F214 of the fourth region C214 of the auxiliary air intake passage C201 are located on the left side of the plane G202. On the other hand, the center axis F216 of the sixth region C216 of the auxiliary air intake passage C201 is located on the right side of the plane G202. Therefore, the curved center axes F212, F214, F216 (curved portions) are located on opposite sides of the plane G202.

Referring to Fig. 20, when the auxiliary air intake passage defining member 291 is seen from the front side, i.e., from a side thereof opposite from the cylinder head 222, the auxiliary air intake passage defining member 291 is located within a region D201 in which other components of the engine unit 213 than the auxiliary air intake passage defining member 291 are accommodated. More specifically, the upstream end defining portion 297 (an upper end of the auxiliary air intake passage defining portion 291) is located at a lower position than a bracket 320 supporting the throttle cable 74 as seen from the front side.

As seen from the front side, the downstream end defining portion 295 (a lower end of the auxiliary air intake passage defining member 291) is located above the cylinder head 222. As seen from the front side, the second portion 293c of the hose 293 (a left end of the auxiliary air intake passage defining member 291) is located on a side of the shroud 300 that is further inside in a lateral direction than the left side surface 303a of the tubular portion 303 of the shroud 300. As seen from the front side, the sixth portion 293g of the hose 293 (a right end of the auxiliary air intake passage defining member 291) is located on a side of the engine body 214 that is further inside in a lateral direction than the holder 46 for the injector 47.

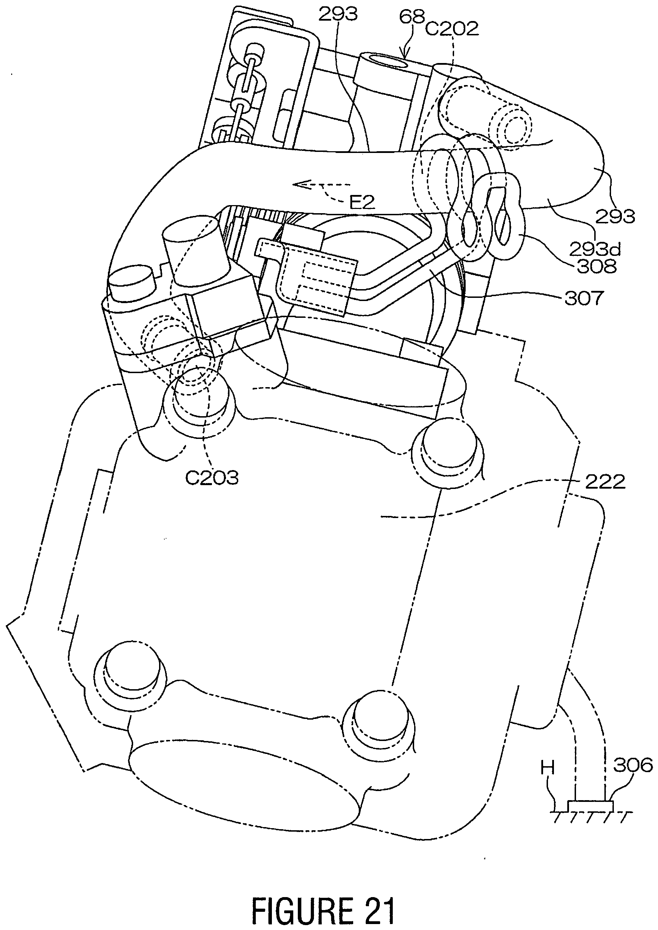

Referring to Fig. 20, an inclination angle θ of the center axis F213 of the third portion 293d of the hose 293 is defined with respect to a horizontal line as seen from the front side of the vehicle. The angle θ is greater than an inclination angle of the vehicle body frame 208 supported by the side stand 306 on a horizontal plane H as shown in Fig. 21 with respect to an position of the vehicle body frame 208 observed when the vehicle stands upright as shown in Fig. 20. At this time, the downstream end portion C203 of the auxiliary air intake passage C201 is located at a lower position than the upstream end portion C202.

Even with the motorcycle 200 supported by the side stand 306, the hose 293 is entirely inclined in the downward and downstream directions in the second flow direction E2. Therefore, the fuel liquefied in the cylinder head 222 is substantially prevented from flowing into the throttle body 68 from the cylinder head 222.

A metal clip 307 is fixed to the cylinder block 221. The clip 307 has a generally C-shaped holding portion 308. The third portion 293d of the hose 293 is engaged with the holding portion 308, whereby the hose 293 is maintained in the intended configuration. The third portion 293d of the hose 293 is located at a generally middle position of the hose 293 with respect to the second flow direction E2.

This embodiment has the following functions and effects. With the center axis F201 of the auxiliary air intake passage C201 crossing the plane G202, the auxiliary air intake passage C201 meanders. Thus, the auxiliary air intake passage C201 has a sufficiently great length. Therefore, the resistance of fluid flow from the injection space B2 to the auxiliary air intake passage C201 is sufficiently increased. Even if the turbulent flow of the fuel occurs in the injection space B2, the fuel is less liable to intrude into the auxiliary air intake passage C201. The arrangement for preventing the turbulent flow of the fuel toward the auxiliary air intake passage C201 can be easily provided at lower costs simply by causing the auxiliary air intake passage C201 to meander.

Further, the length of the auxiliary air intake passage C201 is sufficiently increased by causing the auxiliary air intake passage C201 to meander, rather than by locating the first and second throttle valves 69A, 69B apart from the cylinder head 222. This obviates the need for increasing line distances between the first and second throttle valves 69A, 69B and the combustion chamber B204. Thus, the engine is highly responsive to the throttle operation.

If the fuel intrudes into the auxiliary air intake passage C201 due to the turbulent flow, the intruding fuel flows toward the combustion chamber B204 irrespective of the fuel injection control of the injector 47. This results in variations in the amount of fuel to be supplied to the combustion chamber B204. In this embodiment, however, the turbulent flow of the fuel is suppressed, thereby suppressing the variations.

The fuel flow resistance in the auxiliary air intake passage C201 is not increased by reducing the sectional area of the auxiliary air intake passage C201. Therefore, a sufficient flow rate of the intake air can be reliably provided.

The center axis F201 of the auxiliary air intake passage C201 is curved on three portions thereof, i.e., on the center axis F212 of the second region C212, the center axis F214 of the fourth region C214, and the center axis F216 of the sixth region C216. Therefore, the curved auxiliary air intake passage C201 has a further great fluid flow resistance. This reliably suppresses the turbulent flow of the fuel into the auxiliary air intake passage C201.

The second region C212, the fourth region C214 and the sixth region C216 are disposed on the opposite sides of the plane G202. This provides a sufficiently great fluid flow resistance in the auxiliary air intake passage C201 on opposite sides of the plane G202. Therefore, the auxiliary air intake passage defining member 291 can be compactly provided without the need for increasing the length of the auxiliary air intake passage C201 on one of the opposite sides of the plane G202.

Further, there is a height difference between the upstream end portion C202 and the downstream end portion C203 of the auxiliary air intake passage C201 with respect to the second flow direction E2. The plane G202 extends parallel to the vehicle vertical direction Z1 and is, for example, a vertical plane. The fourth region C214 of the auxiliary air intake passage C201 ranging from the upstream end portion C202 side to the downstream end portion C203 side crosses the plane G202.

Thus, the auxiliary air intake passage C201 is three-dimensionally curved. Even if the line segment G201 extending between the upstream end portion C202 and the downstream end portion C203 of the auxiliary air intake passage C201 has a short length, sufficient fluid flow resistance can be provided in the auxiliary air intake passage C201. Therefore, it is possible to locate the throttle body 68 in the vicinity of the combustion chamber B204. This further improves the engine response to the throttle operation.

The upstream end defining portion 297 of the auxiliary air intake passage defining member 291 is connected to the upper portion of the tubular member 64 of the throttle body 68. Even if water is condensed on an interior surface of the air intake pipe 262, the condensed water is substantially prevented from being sucked into the auxiliary air intake passage C201. The auxiliary air intake passage defining member 291, which is connected to the upper portion 96 of the tubular member 64, has a greater height difference. As a result, the auxiliary air intake passage C201 is mostly inclined in the downward and downstream directions in the second flow direction E2.

The tubular member 64 of the throttle body 68 is located above the engine body 214, and the injector 47 is disposed in the upper portion of the cylinder head 222. Thus, the upstream end defining portion 297 and the downstream end defining portion 295 of the auxiliary air intake passage defining member 291 are located on the upper side of the engine body 214. Therefore, the hose 293 of the auxiliary air intake passage defining member 291 can be easily mounted in the engine unit 213.

A portion of the auxiliary air intake passage C201 except for the upstream end portion C202 is entirely inclined in the downward and downstream directions in the second flow direction E2. Thus, even if the fuel happens to intrude into the auxiliary air intake passage C201, the fuel can be quickly expelled from the auxiliary air intake passage C201 by gravity at engine stop. This prevents degradation of the fuel which may otherwise occur due to accumulation of the fuel in the auxiliary air intake passage C201.

As seen from the front side, the auxiliary air intake passage defining member 291 is located within the region D201 in which other components of the engine unit 213 than the auxiliary air intake passage defining member 291 are accommodated. Therefore, the vehicle engine unit 213 requires a smaller accommodation space, and has a compact size.

Thus, unintended fuel supply to the combustion chamber B204 is suppressed, which may otherwise be caused by the intrusion of fuel into the auxiliary air intake passage C201 due to the turbulent flow. This makes it possible to achieve a desired fuel combustion state. In addition, the motorcycle 200 is excellent in engine response to the throttle operation.

The motorcycle 200 is designed so that the fuel liquefied in the cylinder head 222 is substantially prevented from flowing into the auxiliary air intake passage C201 from the cylinder head 222 even if being supported by the side stand 306.

The hose 293 of the auxiliary air intake passage defining member 291 that defines the auxiliary air intake passage C201 is maintained in the intended configuration by the clip 307. Even if the vehicle body frame 208 is slanted, the configuration of the hose 293 can be maintained.

### Other Embodiments

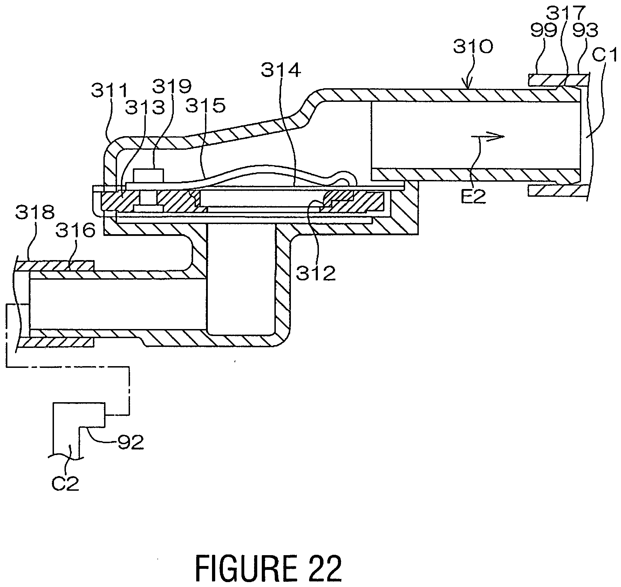

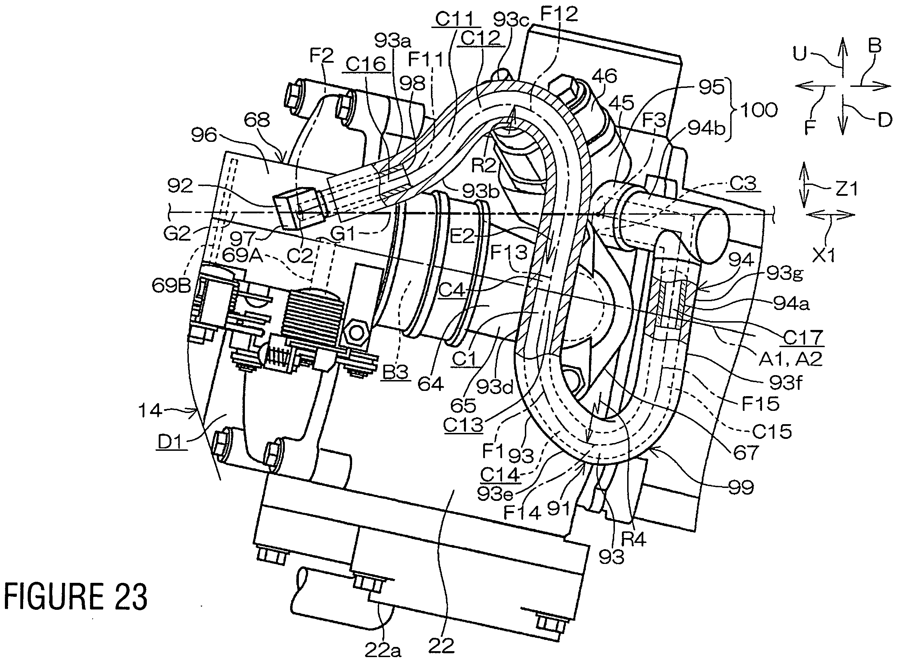

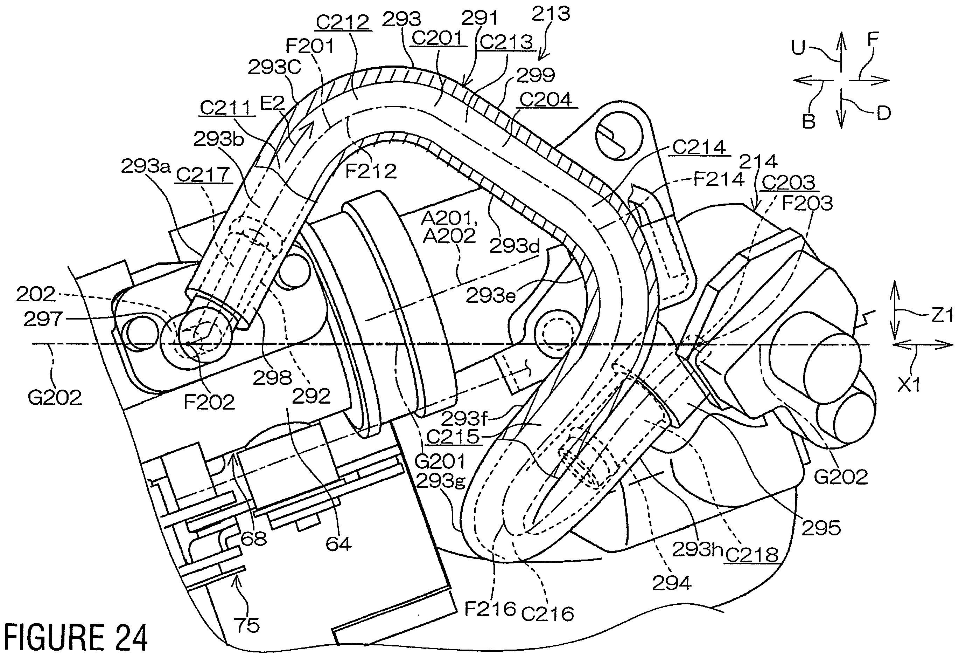

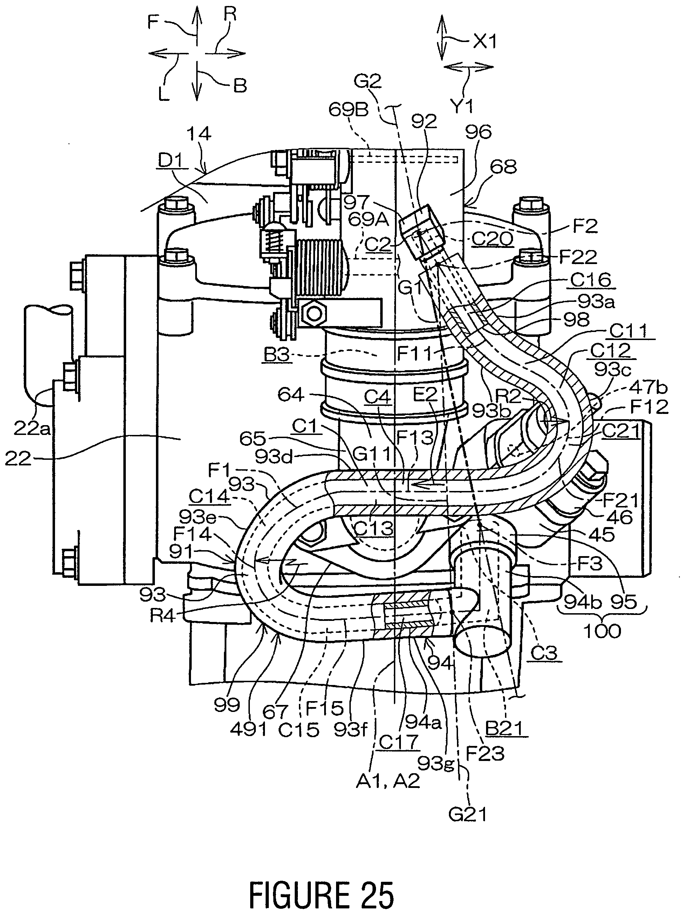

The present invention is not limited to the embodiments described above with reference to the attached drawings. For example, the following embodiments also fall within the technical scope of the present invention. Further, various modifications may be made to these embodiments without departing from the scope of the present invention. In the following description, components corresponding to those in the first embodiment or the second embodiment will be denoted by the same reference numerals as in the first embodiment or the second embodiment, and duplicate description of the construction, the functions and the effects will be omitted.
(1) As shown in Fig. 22, a reed valve 310 (one-way valve) may be provided in the auxiliary air intake passage C1 in the vicinity of the upstream end portion C2. In this case, the reed valve 310 includes a housing 311, a support 313 having a communication hole 312 provided in a middle portion thereof for fluid communication, a reed 314 which opens and closes the communication hole 312, and a stopper 315 which limits the movement of the reed 314. The reed 314 and the stopper 315 are held on the support 313 by a screw 319. The housing 311 includes a tubular upstream connection portion 316 and a tubular downstream connection portion 317. The upstream connection portion 316 is connected to the second boss 92 via a hose 318. The hose 93 of the intermediate portion 99 is connected to the downstream connection portion 317. When the reed 314 is slackened to open the communication hole 312, the assist air flows in the second flow direction E2. With the communication hole 312 being closed by the reed 314, on the other hand, the fluid flow in a direction opposite from the second flow direction E2 is prohibited.
   Thus, the intake air from the main air intake passage B3 flows into the injection space B2 through the auxiliary air intake passage C1. Further, the fuel flowing toward the auxiliary air intake passage C1 due to the turbulent flow is prevented from intruding into the auxiliary air intake passage C1. In addition, the resistance of the fuel flow into the auxiliary air intake passage C1 is increased, while the resistance of the intake air flow from the main air intake passage B3 into the injection space B2 is kept at a lower level.
(2) The auxiliary air intake passage does not necessarily need to be routed on the upper surfaces of the air cleaner and the cylinder head, but may be routed on the side surfaces of the air cleaner and the cylinder head.
(3) The number of the curved center axis portions of the auxiliary air intake passage is not particularly limited, but may be three or greater.
(4) The curved center axis portions of the auxiliary air intake passage may be located on one of the opposite sides of the plane.
(5) The auxiliary air intake passage defining member may be connected to the tubular member at a lower position than the upper surface of the tubular member.
(6) The junction between the intermediate portion and the upstream end defining potion may be orthogonal to the plane.
(7) The auxiliary air intake passage may be configured to be entirely located horizontally when the vehicle body frame is supported aslant on a horizontal ground surface by the side stand.
(8) The auxiliary air intake passage defining member may be configured in a different manner than in the embodiments described above, as long as it defines the auxiliary air intake passage as described in claim 1. For example, the third boss may be obviated, and the downstream end of the hose may be fitted around the fourth boss or the downstream end defining portion. Alternatively, the fourth boss or the downstream end defining portion may be obviated, and the first boss may be formed with a recess in which the third boss is fitted to be fixed. Further, the third boss and the fourth boss (downstream end defining portion) may be obviated, and the downstream end of the hose may be fixed directly to the first boss. Further, the tubular member of the throttle body may be formed with a recess, in which the upstream end of the hose is fixed. The auxiliary air intake passage may be defined by a partitioned pipe.
(9) In the first embodiment, the plane G2 extends parallel to the vehicle vertical direction Z1, but, as shown in Fig. 23, the plane G2 may extend perpendicularly to the vehicle vertical direction Z1 with the auxiliary air intake passage defining member 91 being located on the left side or the right side (on the left side in Fig 23) of the engine body 14.
   In the second embodiment, similarly, the plane G202 extends parallel to the vehicle vertical direction Z1, but, as shown in Fig. 24, the plane G202 may extend perpendicularly to the vehicle vertical direction Z1, with the auxiliary air intake passage defining member 291 being located on the left side or the right side (on the right side in Fig 24) of the engine body 214.
(10) In the first embodiment, the auxiliary air intake passage defining member 91 includes the second boss 92, the hose 93, the third boss 94 and the fourth boss 95 by way of example, but not by way of limitation. Alternatively, as shown in Fig. 25, an auxiliary air intake passage C21 may be provided as a component separate from the second boss 92 fixed to the throttle body 68 and the third boss 94 fixed to the cylinder head 22 for the connection between the second boss 92 and the third boss 94. In this case, the auxiliary air intake passage C21 is defined in the hose 93. The space adjacent to the injection nozzle 47b is a space downstream of the hose 93 up to an area facing the injection nozzle 47b with respect to the assist air flow direction E2.

In this case, the hose 93 (the component at least partly curved) serves as an auxiliary air intake passage defining member 491. The second boss 92 defines a communication passage C20 between the tubular member 64 and the upstream end of the hose 93. The communication passage C20 permits a portion of the main air intake passage B3 between the first and second throttle valves 69A, 69B to communicate with the auxiliary air intake passage C21 defined in the hose 93. A space downstream of the hose 93 up to an area facing the injection nozzle 47b with respect to the flow direction E2 is defined as a space B21 adjacent to the injection nozzle 47b.

A line segment G11 is defined which extends with a minimal length from the most upstream end F22 to the most downstream end F23 of a center axis F21 of the auxiliary air intake passage C21 with respect to the flow direction E2. Further, a plane G21 defined as containing the line segment G11 extends parallel to the vehicle vertical direction Z1. The center axis F21 of the auxiliary air intake passage C21 crosses the plane G21. This embodiment has the same functions and effects as the first embodiment.

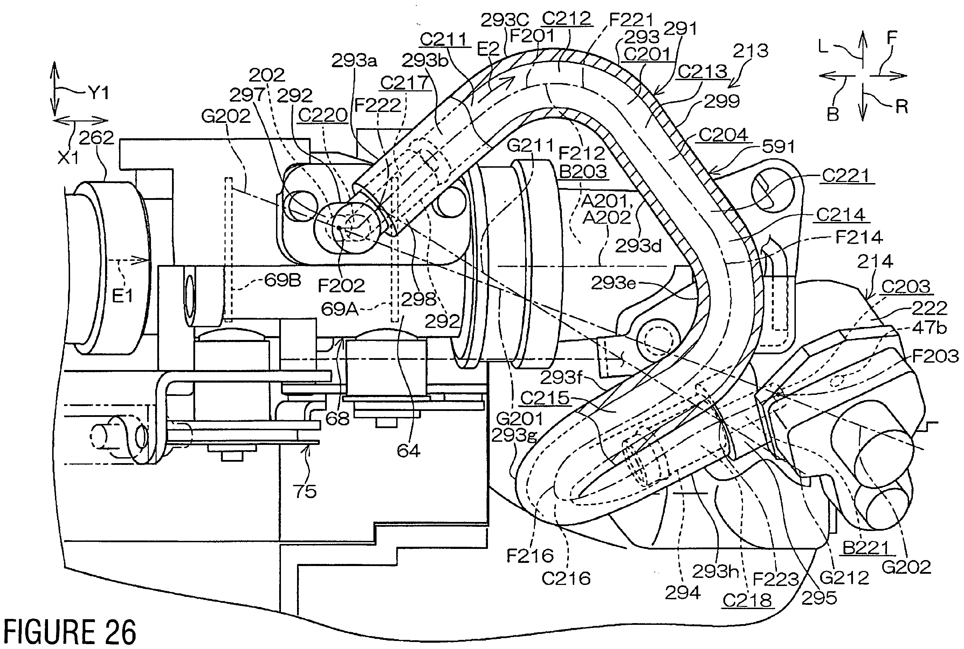

In the second embodiment, the auxiliary air intake passage defining member 291 includes the second boss 292, the hose 293, the third boss 294 and the downstream end defining portion 295 by way of example, but not by way of limitation. Alternatively, as shown in Fig. 26, an auxiliary air intake passage C221 may be provided as a component separate from the second boss 292 fixed to the throttle body 68 and the third boss 294 fixed to the cylinder head 222 for the connection between the second boss 292 and the third boss 294. In this case, an auxiliary air intake passage C221 is defined in the hose 293. The space adjacent to the injection nozzle 47b is a space downstream of the hose 293 until an area facing the injection nozzle 47b with respect to the assist air flow direction E2.

In this case, the hose 293 (the component at least partly curved) serves as an auxiliary air intake passage defining member 591. The second boss 292 defines a communication passage C220 between the tubular member 64 and the upstream end of the hose 293. The communication passage C220 permits a portion of the main air intake passage B203 between the first and second throttle valves 69A, 69B to communicate with the auxiliary air intake passage C221 defined in the hose 293. A space downstream of the hose 293 up to an area facing the injection nozzle 47b with respect to the flow direction E2 is defined as a space B221 adjacent to the injection nozzle 47b.

A line segment G211 is defined, which extends with a minimal length from the most upstream end F222 to the most downstream end F223 of a center axis F221 of the auxiliary air intake passage C221 with respect to the flow direction E2. Further, a plane G212 defined as containing the line segment G211 extends parallel to the vehicle vertical direction Z1. The center axis F221 of the auxiliary air intake passage C221 crosses the plane G212. This embodiment has the same functions and effects as the second embodiment.

In the embodiment of Fig. 25 and the embodiment of Fig. 26, the hose is used as the separate component for the connection between the throttle body and the cylinder head by way of example, but not by way of limitation. A metal pipe or a partitioned pipe may be used as the separate component.

### REFERENCE NUMERALS

1 motorcycle (straddle-type vehicle)
13 vehicle engine unit
14 engine body
21 cylinder block
22 cylinder head
47 injector (fuel injection device)
47b injection nozzle
62 air intake pipe
64 tubular member
68 throttle body
69A, 69B throttle valve
91 auxiliary air intake passage defining member
93d third portion of hose (linear region of intermediate portion)
95 downstream end defining portion
96 upper portion (of tubular member of throttle body)
97 upstream end defining portion
99 intermediate portion
201 motorcycle (straddle-type vehicle)
213 vehicle engine unit
214 engine body
221 cylinder block
222 cylinder head
262 air intake pipe
291 auxiliary air intake passage defining member
293 hose
295 downstream end defining portion
297 upstream end defining portion
299 intermediate portion
306 side stand
307 clip
310 reed valve (one way valve)
491 auxiliary air intake passage defining member
591 auxiliary air intake passage defining member
A2 cylinder axis (center axis of combustion chamber)
A202 cylinder axis (center axis of combustion chamber)
B2 injection space (space adjacent to injector)
B3 main air intake passage
B4 combustion chamber
B21 space adjacent to injector
B203 main air intake passage
B204 combustion chamber
B221 space adjacent to injector
C1 auxiliary air intake passage
C2 upstream end of auxiliary air intake passage
C3 downstream end of auxiliary air intake passage
C4 intermediate region
C21 auxiliary air intake passage
C201 auxiliary air intake passage
C202 upstream end of auxiliary air intake passage
C203 downstream end of auxiliary air intake passage
C204 intermediate region
D1 region
D201 region
E1 intake air flow direction in air intake pipe
E2 intake air flow direction in auxiliary air intake passage
F1 center axis of auxiliary air intake passage
F2 upstream end of center axis
F3 downstream end of center axis
F11, F12, F14 curved portion of center axis
F21 center axis of auxiliary air intake passage
F22 upstream end of center axis
F23 downstream end of center axis
F201 center axis of auxiliary air intake passage
F202 upstream end of center axis
F203 downstream end of center axis
F212, F214, F216 curved portion of center axis
F221 center axis of auxiliary air intake passage
F222 upstream end of center axis
F223 downstream end of center axis
G1 line segment
G2 plane
G11 line segment
G21 plane
G201 line segment
G202 plane
G211 line segment
G212 plane
H horizontal ground surface

## Claims

1. A straddle-type vehicle comprising:
a vehicle body frame; and
a vehicle engine unit (13) supported by the vehicle body frame, the vehicle engine unit comprising:
an engine body (14, 214) including a cylinder head (22, 222) that defines a part of a combustion chamber (B4, B204) and a part of a main air intake passage (B3, B204) connected to the combustion chamber (B4, B204);
an air intake pipe (62, 262) connected to the cylinder head (22, 222) and cooperative with the cylinder head (22, 222) to define the main air intake passage (B3, B204);
a throttle body (68) including two throttle valves (69A, 69B) spaced from each other in an intake air flow direction in the air intake pipe (62, 262), and a tubular member (64) that defines a part of the air intake pipe (62, 262) and accommodates the two throttle valves (69A, 69B);
a fuel injection device (47) attached to the cylinder head (22, 222) and having an injection nozzle (47b) which injects a fuel into the part of the main air intake passage (B3, B204) defined in the cylinder head (22, 222); and
an auxiliary air intake passage defining member (91, 291, 491, 591) that defines an auxiliary air intake passage (C21, C221) communicating with a portion of the main air intake passage (B3, B204) between the two throttle valves (69A, 69B) to guide intake air into a space adjacent to the injection nozzle (47b) at least during idling,
wherein the auxiliary air intake passage (C21, C221) has a center axis (F1, F21, F201, F221) that has opposite ends (F2, F22, F202, F222, F3, F23, F203, F223),
wherein the tubular member (64) of the throttle body (68) is disposed above the engine body (14, 214),
wherein the fuel injection device (47) is disposed in an upper portion of the cylinder head (22, 222),
**characterized in that**
the auxiliary air intake passage (C21, C221) crosses a plane (G2, G202, G212), which extends parallel to the vehicle vertical direction (Z1), or which extends perpendicular to the vehicle vertical direction (Z1), the plane containing a straight line segment (G1, G11, G211) that extends between the opposite ends (F2, F22, F202, F222, F3, F23, F203, F223) of the center axis (F1, F21, F201, F221) of the auxiliary air intake passage (C21, C221),
the auxiliary air intake passage defining member (91, 291, 491, 591) is connected to an upper portion of the tubular member (64) of the throttle body (68),
the center axis (F1, F21, F201, F221) has at least two curved portions (F11, F12, F14, F212, F212, F214, F216) located on opposite sides of the plane (G2, G202, G212),
the auxiliary air intake passage defining member (91, 291, 491, 591) includes an upstream end defining portion (97, 297) and a downstream end defining portion (95, 295) that respectively define an upstream end portion and a downstream end portion of the auxiliary air intake passage (C21, C221) with respect to an intake air flow direction in the auxiliary air intake passage (C21, C221), and an intermediate portion (99, 299) that defines an intermediate region of the auxiliary air intake passage (C21, C221) between the upstream end portion and the downstream end portion, wherein
the intermediate portion (99, 299) is connected to at least one of the upstream end defining portion (97, 297) and the downstream end defining portion (95, 295), generally in a perpendicular manner to the plane (G2, G202, G212)..

2. A straddle-type vehicle as set forth in claim 1, wherein
the auxiliary air intake passage (C21, C221) has an upstream end (C2, C202) and a downstream end (C3, C203) with respect to an intake air flow direction in the auxiliary air intake passage (C21, C221), the upstream end (C2, C202) and the downstream end (C3, C203) having a height difference, and
the auxiliary air intake passage (C21, C221) has a portion crossing the plane (G2, G202, G212) between the upstream end (C2, C202) and the downstream end (C3, C203) thereof.

3. A straddle-type vehicle as set forth in claim 1, wherein the auxiliary air intake passage (C21, C221) has a downstream portion at least partly inclined in the downward and downstream directions in an intake air flow direction in the auxiliary air intake passage (C21, C221).

4. A straddle-type vehicle as set forth in claim 1, wherein
the auxiliary air intake passage defining member (91, 291, 491, 591) is located within a region in which other components of the engine unit than the auxiliary air intake passage defining member (91, 291, 491, 591) are accommodated, as seen from a side thereof opposite from the engine body (14, 214).

5. A straddle-type vehicle as set forth in claim 1, wherein
the intermediate portion (99, 299) has a linear region extending across a center axis (A202) of the combustion chamber (B4, B204) when the auxiliary air intake passage defining member (91, 291, 491, 591) is seen from a side thereof opposite from the engine body (14, 214).

6. A straddle-type vehicle as set forth in claim 1, wherein
the auxiliary air intake passage defining member (91, 291, 491, 591) further includes a one-way valve which prevents a fluid from flowing in a direction opposite from an intake air flow direction in the auxiliary air intake passage (C21, C221).

7. A straddle-type vehicle as set forth in claim 1, further comprising a side stand which supports the vehicle body frame, wherein
the auxiliary air intake passage (C21, C221) is entirely oriented horizontally or a downstream end portion of the auxiliary air intake passage (C21, C221) is located at a lower position than an upstream end portion of the auxiliary air intake passage (C21, C221) when the vehicle body frame is supported aslant on a horizontal ground surface by the side stand.

8. A straddle-type vehicle as set forth in claim 1, wherein the auxiliary air intake passage defining member (91, 291, 491, 591) includes:
a flexible hose at least partly defining the auxiliary air intake passage (C21, C221); and
a clip that maintains the hose in a predetermined configuration.

## Patentansprüche

1. Ein Grätsch-Typ-Fahrzeug, das folgende Merkmale aufweist:
einen Fahrzeugkarosserierahmen und
eine Fahrzeugmotoreinheit (13), die von dem Fahrzeugkarosserierahmen gestützt ist, wobei die Fahrzeugmotoreinheit folgende Merkmale aufweist:
einen Motorkörper (14, 214), der einen Zylinderkopf (22, 222) umfasst, der einen Teil einer Verbrennungskammer (B4, B204) und einen Teil eines Hauptlufteinlassdurchgangs (B3, B204) definiert, der mit der Verbrennungskammer (B4, B204) verbunden ist;
ein Lufteinlassrohr (62, 262), das mit dem Zylinderkopf (22, 222) verbunden ist und mit dem Zylinderkopf (22, 222) zusammenwirkt, um den Hauptlufteinlassdurchgang (B3, B204) zu definieren;
eine Drosselklappe (68), die zwei Drosselventile (69A, 69B), die in einer Einlassluftströmungsrichtung in dem Lufteinlassrohr (62, 262) voneinander beabstandet sind, und ein röhrenförmiges Bauglied (64) umfasst, das einen Teil des Lufteinlassrohrs (62, 262) definiert und die zwei Drosselventile (69A, 69B) aufnimmt;
eine Kraftstoffeinspritzvorrichtung (47), die an dem Zylinderkopf (22, 222) angebracht ist und eine Einspritzdüse (47b) aufweist, die einen Kraftstoff in den Teil des Hauptlufteinlassdurchgangs (B3, B204) einspritzt, der in dem Zylinderkopf (22, 222) definiert ist; und
ein Zusätzlicher-Lufteinlassdurchgang-Definitionsbauglied (91, 291, 491, 591), das einen zusätzlichen Lufteinlassdurchgang (C21, C221) definiert, der mit einem Abschnitt des Hauptlufteinlassdurchgangs (B3, B204) zwischen den zwei Drosselventilen (69A, 69B) kommuniziert, um Einlassluft in einen zu der Einspritzdüse (47b) benachbarten Raum zu leiten, zumindest im Leerlauf,
wobei der zusätzliche Lufteinlassdurchgang (C21, C221) eine Mittelachse (F1, F21, F201, F221) mit gegenüberliegenden Enden (F2, F22, F202, F222, F3, F23, F203, F223) aufweist,
wobei das röhrenförmige Bauglied (64) der Drosselklappe (68) über dem Motorkörper (14, 214) angeordnet ist,
wobei die Kraftstoffeinspritzvorrichtung (47) in einem oberen Abschnitt des Zylinderkopfs (22, 222) angeordnet ist,
**dadurch gekennzeichnet, dass**
der zusätzliche Lufteinlassdurchgang (C21, C221) eine Ebene (G2, G202, G212), kreuzt, die sich parallel zu der Fahrzeugvertikalrichtung (Z1) erstreckt oder sich senkrecht zu der Fahrzeugvertikalrichtung (Z1) erstreckt, wobei die Ebene ein Geradensegment (G1, G11, G211) umfasst, das sich zwischen den gegenüberliegenden Enden (F2, F22, F202, F222, F3, F23, F203, F223) der Mittelachse (F1, F21, F201, F221) des zusätzlichen Lufteinlassdurchgangs (C21, C221) erstreckt,
das Zusätzlicher-Lufteinlassdurchgang-Definitionsbauglied (91, 291, 491, 591) mit einem oberen Abschnitt des röhrenförmigen Bauglieds (64) der Drosselklappe (68) verbunden ist,
die Mittelachse (F1, F21, F201, F221) zumindest zwei gekrümmte Abschnitte (F11, F12, F14, F212, F212, F214, F216) aufweist, die sich auf gegenüberliegenden Seiten der Ebene (G2, G202, G212) befinden,
das Zusätzlicher-Lufteinlassdurchgang-Definitionsbauglied (91, 291, 491, 591) einen Stromaufwärtiges-Ende-Definitionsabschnitt (97, 297) und einen Stromabwärtiges-Ende-Definitionsabschnitt (95, 295), die jeweils einen Stromaufwärtiges-Ende-Abschnitt und einen Stromabwärtiges-Ende-Abschnitt des zusätzlichen Lufteinlassdurchgangs (C21, C221) bezüglich einer Einlassluftströmungsrichtung in dem zusätzlichen Lufteinlassdurchgang (C21, C221) definieren, und einen Zwischenabschnitt (99, 299) umfasst, der eine Zwischenregion des zusätzlichen Lufteinlassdurchgangs (C21, C221) zwischen dem Stromaufwärtiges-Ende-Abschnitt und dem Stromabwärtiges-Ende-Abschnitt definiert, wobei
der Zwischenabschnitt (99, 299) mit dem Stromaufwärtiges-Ende-Defininitionsabschnitt (97, 297) und/oder dem Stromabwärtiges-Ende-Defininitionsabschnitt (95, 295) allgemein auf eine Weise verbunden ist, die zu der Ebene (G2, G202, G212) senkrecht ist.

2. Ein Grätsch-Typ-Fahrzeug gemäß Anspruch 1, bei dem
der zusätzliche Lufteinlassdurchgang (C21, C221) ein stromaufwärtiges Ende (C2, C202) und ein stromabwärtiges Ende (C3, C203) bezüglich einer Einlassluftströmungsrichtung in dem zusätzlichen Lufteinlassdurchgang (C21, C221) aufweist, wobei das stromaufwärtige Ende (C2, C202) und das stromabwärtige Ende (C3, C203) eine Höhendifferenz aufweisen, und
der zusätzliche Lufteinlassdurchgang (C21, C221) einen Abschnitt aufweist, der die Ebene (G2, G202, G212) zwischen dem stromaufwärtigen Ende (C2, C202) und dem stromabwärtigen Ende (C3, C203) desselben kreuzt.

3. Ein Grätsch-Typ-Fahrzeug gemäß Anspruch 1, bei dem der zusätzliche Lufteinlassdurchgang (C21, C221) einen stromabwärtigen Abschnitt aufweist, der in der Abwärts- und Stromabwärtsrichtung in einer Einlassluftströmungsrichtung in dem zusätzlichen Lufteinlassdurchgang (C21, C221) zumindest teilweise geneigt ist.

4. Ein Grätsch-Typ-Fahrzeug gemäß Anspruch 1, bei dem
das Zusätzlicher-Lufteinlassdurchgang-Definitionsbauglied (91, 291, 491, 591) sich in einer Region befindet, in der andere Komponenten der Motoreinheit als das Zusätzlicher-Lufteinlassdurchgang-Definitionsbauglied (91, 291, 491, 591) aufgenommen sind, wie von einer Seite desselben gegenüber dem Motorkörper (14, 214) betrachtet.

5. Ein Grätsch-Typ-Fahrzeug gemäß Anspruch 1, bei dem
der Zwischenabschnitt (99, 299) eine lineare Region aufweist, die sich über eine Mittelachse (A202) der Verbrennungskammer (B4, B204) erstreckt, wenn das Zusätzlicher-Lufteinlassdurchgang-Definitionsbauglied (91, 291, 491, 591) von einer Seite desselben betrachtet wird, die entgegengesetzt zu dem Motorkörper (14, 214) ist.

6. Ein Grätsch-Typ-Fahrzeug gemäß Anspruch 1, bei dem
das Zusätzlicher-Lufteinlassdurchgang-Definitionsbauglied (91, 291, 491, 591) ferner ein Einwegventil umfasst, das ein Strömen eines Fluids in einer Richtung, die entgegengesetzt zu einer Einlassluftströmungsrichtung ist, in dem zusätzlichen Lufteinlassdurchgang (C21, C221) verhindert.

7. Ein Grätsch-Typ-Fahrzeug gemäß Anspruch 1, das ferner einen Seitenständer aufweist, der den Fahrzeugkarosserierahmen stützt, wobei
der zusätzliche Lufteinlassdurchgang (C21, C221) vollständig horizontal ausgerichtet ist oder ein Stromabwärtiges-Ende-Abschnitt des zusätzlichen Lufteinlassdurchgangs (C21, C221) sich in einer niedrigeren Position als ein Stromaufwärtiges-Ende-Abschnitt des zusätzlichen Lufteinlassdurchgangs (C21, C221) befindet, wenn der Fahrzeugkarosserierahmen auf einer horizontalen Bodenfläche seitens des Seitenständers schräg gestützt ist.

8. Ein Grätsch-Typ-Fahrzeug gemäß Anspruch 1, bei dem das Zusätzlicher-Lufteinlassdurchgang-Definitionsbauglied (91, 291, 491, 591) Folgendes umfasst:
einen flexiblen Schlauch, der den zusätzlichen Lufteinlassdurchgang (C21, C221) zumindest teilweise definiert; und
eine Klemme, die den Schlauch in einer vorbestimmten Ausbildung hält.

## Revendications

1. Véhicule de type à enfourcher, comprenant:
un châssis de carrosserie de véhicule; et
une unité de moteur de véhicule (13) supportée par le châssis de carrosserie de véhicule, l'unité de moteur de véhicule comprenant:
un corps de moteur (14, 214) comportant une culasse (22, 222) qui définit une partie d'une chambre de combustion (B4, B204) et une partie d'un passage d'admission d'air principal (B3, B204) connectée à la chambre de combustion (B4, B204);
un tuyau d'admission d'air (62, 262) connecté à la culasse (22, 222) et coopérant avec la culasse (22, 222) pour définir le passage d'admission d'air principal (B3, B204);
un corps d'étranglement (68) comportant deux soupapes d'étranglement (69A, 69B) distantes l'une de l'autre dans une direction de circulation d'air d'admission dans le tuyau d'admission d'air (62, 262), et un élément tubulaire (64) qui définit une partie du tuyau d'admission d'air (62, 262) et abrite les deux soupapes d'étranglement (69A, 69B);
un dispositif d'injection de carburant (47) fixé à la culasse (22, 222) et présentant une buse d'injection (47b) qui injecte un carburant dans la partie du passage d'admission d'air principal (B3, B204) définie dans la culasse (22 222); et
un élément définissant le passage d'admission d'air auxiliaire (91, 291, 491, 591) qui définit un passage d'admission d'air auxiliaire (C21, C221) communiquant avec une partie du passage d'admission d'air principal (B3, B204) entre les deux soupapes d'étranglement (69A, 69B) pour guider l'air d'entrée vers un espace adjacent à la buse d'injection (47b) au moins pendant le ralenti,
dans lequel le passage d'admission d'air auxiliaire (C21, C221) présente un axe central (F1, F21, F201, F221) qui présente des extrémités opposées (F2, F22, F202, F222, F3, F23, F203, F223),
dans lequel l'élément tubulaire (64) du corps d'étranglement (68) est disposé au-dessus du corps de moteur (14, 214),
dans lequel le dispositif d'injection de carburant (47) est disposé dans une partie supérieure de la culasse (22, 222),
**caractérisé par le fait que**
le passage d'admission d'air auxiliaire (C21, C221) traverse un plan (G2, G202, G212) qui s'étend parallèlement à la direction verticale du véhicule (Z1) ou qui s'étend perpendiculairement à la direction verticale du véhicule (Z1), le plan contenant un segment en ligne droite (G1, G11, G211) qui s'étend entre les extrémités opposées (F2, F22, F202, F222, F3, F23, F203, F223) de l'axe central (F1, F21, F201, F221) du passage d'admission d'air auxiliaire (C21, C221),
l'élément définissant le passage d'admission d'air auxiliaire (91, 291, 491, 591) est connecté à une partie supérieure de l'élément tubulaire (64) du corps d'étranglement (68),
l'axe central (F1, F21, F201, F221) présente au moins deux parties courbes (F11, F12, F14, F212, F212, F214, F216) situées de côtés opposés du plan (G2, G202, G212),
l'élément définissant le passage d'admission d'air auxiliaire (91, 291, 491, 591) comporte une partie définissant une extrémité amont (97, 297) et une partie définissant une extrémité aval (95, 295) qui définissent, respectivement, une partie d'extrémité amont et une partie d'extrémité aval du passage d'admission d'air auxiliaire (C21, C221) par rapport à une direction de circulation d'air d'admission dans le passage d'admission d'air auxiliaire (C21, C221), et une partie intermédiaire (99, 299) qui définit une région intermédiaire du passage d'admission d'air auxiliaire (C21, C221) entre la partie d'extrémité amont et la partie d'extrémité aval,
dans lequel
la partie intermédiaire (99, 299) est connectée à au moins l'une parmi la partie définissant l'extrémité amont (97, 297) et la partie définissant l'extrémité aval (95, 295), généralement de manière perpendiculaire au plan (G2, G202, G212).

2. Véhicule de type à enfourcher selon la revendication 1, dans lequel
le passage d'admission d'air auxiliaire (C21, C221) présente une extrémité amont (C2, C202) et une extrémité aval (C3, C203) par rapport à une direction de circulation d'air d'admission dans le passage d'admission d'air auxiliaire (C21, C221), l'extrémité amont (C2, C202) et l'extrémité aval (C3, C203) présentant une différence de hauteur, et
le passage d'admission d'air auxiliaire (C21, C221) présente une partie traversant le plan (G2, G202, G212) entre l'extrémité amont (C2, C202) et l'extrémité aval (C3, C203) de ce dernier.

3. Véhicule de type à enfourcher selon la revendication 1, dans lequel le passage d'admission d'air auxiliaire (C21, C221) présente une partie aval au moins partiellement inclinée dans les directions vers le bas et en aval dans une direction de circulation d'air d'admission dans le passage d'admission d'air auxiliaire (C21, C221).

4. Véhicule de type à enfourcher selon la revendication 1, dans lequel
l'élément définissant le passage d'admission d'air auxiliaire (91, 291, 491, 591) est situé dans une région dans laquelle sont logés d'autres composants de l'unité de moteur que l'élément définissant le passage d'admission d'air auxiliaire (91, 291, 491, 591), tel que vu d'un côté de ce dernier opposé au corps de moteur (14, 214).

5. Véhicule de type à enfourcher selon la revendication 1, dans lequel
la partie intermédiaire (99, 299) présente une région linéaire s'étendant à travers un axe central (A202) de la chambre de combustion (B4, B204) lorsque l'élément définissant le passage d'admission d'air auxiliaire (91, 291, 491, 591) est vu d'un côté de ce dernier opposé au corps de moteur (14, 214).

6. Véhicule de type à enfourcher selon la revendication 1, dans lequel
l'élément définissant le passage d'admission d'air auxiliaire (91, 291, 491, 591) comporte par ailleurs un clapet anti-retour qui empêche qu'un fluide ne circule dans une direction opposée à une direction de circulation d'air d'admission dans le passage d'admission d'air auxiliaire (C21, C221).

7. Véhicule de type à enfourcher selon la revendication 1, comprenant par ailleurs une béquille latérale qui supporte le châssis de carrosserie de véhicule,
dans lequel
le passage d'admission d'air auxiliaire (C21, C221) est entièrement orienté horizontalement ou une partie d'extrémité aval du passage d'admission d'air auxiliaire (C21, C221) est située en une position plus basse qu'une partie d'extrémité amont du passage d'admission d'air auxiliaire (C21, C221) lorsque le châssis de carrosserie de véhicule est supporté de manière oblique sur une surface de sol horizontale par la béquille latérale.

8. Véhicule de type à enfourcher selon la revendication 1, dans lequel l'élément définissant le passage d'admission d'air auxiliaire (91, 291, 491, 591) comporte:
un tuyau flexible définissant au moins partiellement le passage d'admission d'air auxiliaire (C21, C221); et
une attache qui maintient le tuyau flexible selon une configuration prédéterminée.
